(19) **Europäisches Patentamt**
**European Patent Office**
**Office européen des brevets**

(11) **EP 2 557 795 A2**

(12) **EUROPEAN PATENT APPLICATION**
published in accordance with Art. 153(4) EPC

(43) Date of publication:
**13.02.2013 Bulletin 2013/07**

(51) Int Cl.:
***H04N 7/32*** *(2006.01)*

(21) Application number: **11766160.3**

(22) Date of filing: **06.04.2011**

(86) International application number:
**PCT/KR2011/002426**

(87) International publication number:
**WO 2011/126309 (13.10.2011 Gazette 2011/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2010 US 427529 P**
**06.04.2010 US 321196 P**

(71) Applicant: **Samsung Electronics Co., Ltd**
**Gyeonggi-do 443-742 (KR)**

(72) Inventors:
• **ALSHIN, Alexander**
**Suwon-si**
**Gyeonggi-do 443-744 (KR)**

• **ALSHINA, Elena**
**Suwon-si**
**Gyeonggi-do 443-744 (KR)**
• **SHLYAKHOV, Nikolay**
**Suwon-si**
**Gyeonggi-do 443-070 (KR)**
• **LEE, Tammy**
**Seoul 137-070 (KR)**

(74) Representative: **Clark, David James**
**Appleyard Lees**
**15 Clare Road**
**Halifax**
**HX1 2HY (GB)**

(54) **METHOD AND APPARATUS FOR VIDEO ENCODING AND METHOD AND APPARATUS FOR VIDEO DECODING**

(57)    Methods and apparatuses for encoding and decoding a video by using pixel unit bi-directional motion compensation. According to the method of encoding a video, pixel unit motion compensation is performed on each pixel of a current block by using pixels of first and second reference pictures used for bi-directional motion prediction and compensation, in addition to block unit bi-directional motion compensation performed on the current block, and a bi-directional motion prediction value of the current block is generated by using results of the block unit bi-directional motion compensation and pixel unit motion compensation.

FIG. 14

**Description**

TECHNICAL FIELD

The present invention relates to encoding and decoding a video, and more particularly, to a process of more precisely performing bi-directional motion prediction and compensation on a video.

BACKGROUND ART

As hardware for reproducing and storing high resolution or high quality video content is being developed and supplied, a need for a video codec for effectively encoding or decoding the high resolution or high quality video content is increasing. In a conventional video codec, a video is encoded according to a limited encoding method based on a macroblock having a predetermined size.

DETAILED DESCRIPTION OF THE INVENTION

TECHNICAL PROBLEM

The present invention provides methods and apparatuses for encoding and decoding an image, which precisely perform pixel unit bi-directional motion prediction and compensation without a large increase in the number of bits required to encode motion information.

TECHNICAL SOLUTION

According to an embodiment of the present invention, more precise motion prediction and compensation are performed without an increase in additional overhead of information related to a motion compensation mode by performing pixel unit motion compensation based on an optical flow of pixels of a reference picture and results of block unit motion compensation.

ADVANTAGEOUS EFFECTS

According to the present invention, precise pixel unit bi-directional motion prediction and compensation are performed without a large increase in the number of bits required to encode motion information.

DESCRIPTION OF THE DRAWINGS

FIG. 1 is a block diagram of an apparatus for encoding a video, according to an embodiment of the present invention;
FIG. 2 is a block diagram of an apparatus for decoding a video, according to an embodiment of the present invention;
FIG. 3 is a diagram for describing a concept of coding units according to an embodiment of the present invention;
FIG. 4 is a block diagram of an image encoder based on coding units according to an embodiment of the present invention;
FIG. 5 is a block diagram of an image decoder based on coding units according to an embodiment of the present invention;
FIG. 6 is a diagram illustrating deeper coding units according to depths, and partitions according to an embodiment of the present invention;
FIG. 7 is a diagram for describing a relationship between a coding unit and transformation units, according to an embodiment of the present invention;
FIG. 8 is a diagram for describing encoding information of coding units corresponding to a coded depth, according to an embodiment of the present invention;
FIG. 9 is a diagram of deeper coding units according to depths, according to an embodiment of the present invention;
FIGS. 10 through 12 are diagrams for describing a relationship between coding units, prediction units, and transformation units, according to an embodiment of the present invention;
FIG. 13 is a diagram for describing a relationship between a coding unit, a prediction unit or a partition, and a transformation unit, according to encoding mode information of Table 1;
FIG. 14 is a block diagram of a motion compensator according to an embodiment of the present invention;
FIG. 15 is a reference diagram for describing processes of block-based bi-directional motion prediction and compensation, according to an embodiment of the present invention;

FIG. 16 is a reference diagram for describing a process of performing pixel unit motion compensation, according to an embodiment of the present invention.

FIG. 17 is a reference diagram for describing a process of calculating horizontal and vertical direction gradients, according to an embodiment of the present invention;

FIG. 18 is a reference diagram for describing a process of calculating horizontal and vertical direction gradients, according to another embodiment of the present invention;

FIG. 19 is a table showing filter coefficients of a gradient calculating filter, according to an embodiment of the present invention;

FIG. 20 is a reference diagram for describing a process of determining a horizontal direction displacement vector and a vertical direction displacement vector, according to an embodiment of the present invention;

FIG. 21 is a flowchart illustrating a method of encoding a video, according to an embodiment of the present invention;

FIG. 22 is a block diagram of a motion compensator included in a decoding apparatus, according to an embodiment of the present invention; and

FIG. 23 is a flowchart illustrating a method of decoding a video, according to an embodiment of the present invention.

BEST MODE

According to an aspect of the present invention, there is provided a method of encoding a video, the method comprising: performing bi-directional motion prediction for determining a first motion vector and a second motion vector respectively indicating a first corresponding region and a second corresponding region most similar to a current block in a first reference picture and a second reference picture; performing block unit bi-directional motion compensation on the current block by using the first motion vector and the second motion vector; performing pixel unit motion compensation on each pixel of the current block by using pixels of the first reference picture and second reference picture; and generating a bi-directional motion prediction value of the current block by using results of the block unit bi-directional motion compensation and pixel unit motion compensation.

According to another aspect of the present invention, there is provided a method of decoding a video, the method comprising: extracting information about a motion prediction mode of a current block to be decoded, from a bitstream; extracting information about a first motion vector and second motion vector respectively indicating a first corresponding region and second corresponding region most similar to the current block in a first reference picture and second reference picture from the bitstream, when the extracted motion prediction mode is a bi-directional motion prediction mode using a pixel unit motion compensation value; performing block unit bi-directional motion compensation on the current block by using the first motion vector and second motion vector; performing pixel unit motion compensation on each pixel of the current block by using pixels of the first reference picture and second reference picture; and generating a bi-directional motion prediction value of the current block by using results of the block unit bi-directional motion compensation and pixel unit motion compensation.

According to another aspect of the present invention, there is provided an apparatus for encoding a video, the apparatus comprising: a motion predictor for performing bi-directional motion prediction for determining a first motion vector and a second motion vector respectively indicating a first corresponding region and a second corresponding region most similar to a current block in a first reference picture and a second reference picture; a block unit motion compensator for performing block unit bi-directional motion compensation on the current block by using the first motion vector and the second motion vector; a pixel unit motion compensator for performing pixel unit motion compensation on each pixel of the current block by using pixels of the first reference picture and second reference picture; and a prediction value generator for generating a bi-directional motion prediction value of the current block by using results of the block unit bi-directional motion compensation and pixel unit motion compensation.

According to another aspect of the present invention, there is provided an apparatus for decoding a video, the apparatus comprising: an entropy decoder for extracting information about a motion prediction mode of a current block to be decoded, from a bitstream, and extracting information about a first motion vector and second motion vector respectively indicating a first corresponding region and second corresponding region most similar to the current block in a first reference picture and second reference picture from the bitstream, when the extracted motion prediction mode is a bi-directional motion prediction mode using a pixel unit motion compensation value; a block unit motion compensator for performing block unit bi-directional motion compensation on the current block by using the first motion vector and second motion vector; a pixel unit motion compensator for performing pixel unit motion compensation on each pixel of the current block by using pixels of the first reference picture and second reference picture; and a prediction value generator for generating a bi-directional motion prediction value of the current block by using results of the block unit bi-directional motion compensation and pixel unit motion compensation.

MODE OF THE INVENTION

Hereinafter, the present invention will be described more fully with reference to the accompanying drawings, in which exemplary embodiments of the invention are shown.

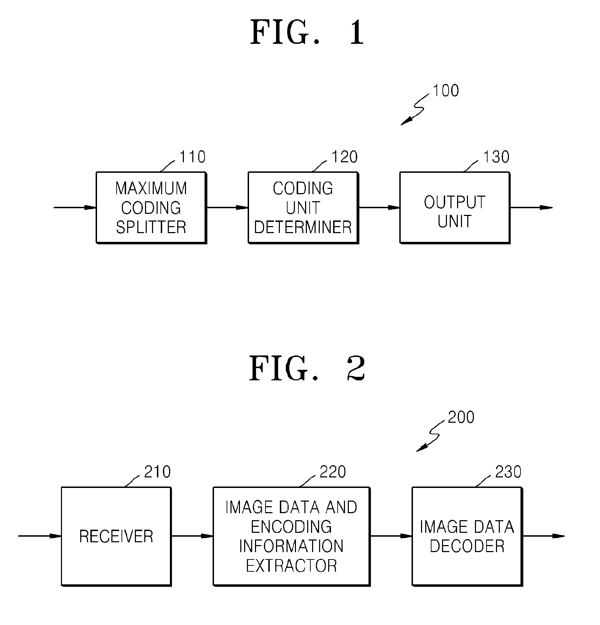

FIG. 1 is a block diagram of a video encoding apparatus 100, according to an embodiment of the present invention.

The video encoding apparatus 100 includes a maximum coding unit splitter 110, a coding unit determiner 120, and an output unit 130.

The maximum coding unit splitter 110 may split a current picture based on a maximum coding unit for a current picture of an image. If the current picture is larger than the maximum coding unit, image data of the current picture may be split into the at least one maximum coding unit. The maximum coding unit according to an embodiment of the present invention may be a data unit having a size of 32x32, 64x64, 128x128, 256x256, etc., wherein a shape of the data unit is a square having a width and length in squares of 2 that is higher than 8. The image data may be output to the coding unit determiner 120 according to the at least one maximum coding unit.

A coding unit according to an embodiment of the present invention may be characterized by a maximum size and a depth. The depth denotes a number of times the coding unit is spatially split from the maximum coding unit, and as the depth deepens, deeper encoding units according to depths may be split from the maximum coding unit to a minimum coding unit. A depth of the maximum coding unit is an uppermost depth and a depth of the minimum coding unit is a lowermost depth. Since a size of a coding unit corresponding to each depth decreases as the depth of the maximum coding unit deepens, a coding unit corresponding to an upper depth may include a plurality of coding units corresponding to lower depths.

As described above, the image data of the current picture is split into the maximum coding units according to a maximum size of the coding unit, and each of the maximum coding units may include deeper coding units that are split according to depths. Since the maximum coding unit according to an embodiment of the present invention is split according to depths, the image data of a spatial domain included in the maximum coding unit may be hierarchically classified according to depths.

A maximum depth and a maximum size of a coding unit, which limit the total number of times a height and a width of the maximum coding unit are hierarchically split may be predetermined.

The coding unit determiner 120 encodes at least one split region obtained by splitting a region of the maximum coding unit according to depths, and determines a depth to output a finally encoded image data according to the at least one split region. In other words, the coding unit determiner 120 determines a coded depth by encoding the image data in the deeper coding units according to depths, according to the maximum coding unit of the current picture, and selecting a depth having the least encoding error. The determined coded depth and the encoded image data according to the determined coded depth are output to the output unit 130.

The image data in the maximum coding unit is encoded based on the deeper coding units corresponding to at least one depth equal to or below the maximum depth, and results of encoding the image data are compared based on each of the deeper coding units. A depth having the least encoding error may be selected after comparing encoding errors of the deeper coding units. At least one coded depth may be selected for each maximum coding unit.

The size of the maximum coding unit is split as a coding unit is hierarchically split according to depths, and as the number of coding units increases. Also, even if coding units correspond to same depth in one maximum coding unit, it is determined whether to split each of the coding units corresponding to the same depth to a lower depth by measuring an encoding error of the image data of the each coding unit, separately. Accordingly, even when image data is included in one maximum coding unit, the encoding errors may differ according to regions in the one maximum coding unit, and thus the coded depths may differ according to regions in the image data. Thus, one or more coded depths may be determined in one maximum coding unit, and the image data of the maximum coding unit may be divided according to coding units of at least one coded depth.

Accordingly, the coding unit determiner 120 may determine coding units having a tree structure included in the maximum coding unit. The 'coding units having a tree structure' according to an embodiment of the present invention include coding units corresponding to a depth determined to be the coded depth, from among all deeper coding units included in the maximum coding unit. A coding unit of a coded depth may be hierarchically determined according to depths in the same region of the maximum coding unit, and may be independently determined in different regions. Similarly, a coded depth in a current region may be independently determined from a coded depth in another region.

A maximum depth according to an embodiment of the present invention is an index related to the number of splitting times from a maximum coding unit to a minimum coding unit. A first maximum depth according to an embodiment of the present invention may denote the total number of splitting times from the maximum coding unit to the minimum coding unit. A second maximum depth according to an embodiment of the present invention may denote the total number of depth levels from the maximum coding unit to the minimum coding unit. For example, when a depth of the maximum coding unit is 0, a depth of a coding unit, in which the maximum coding unit is split once, may be set to 1, and a depth of a coding unit, in which the maximum coding unit is split twice, may be set to 2. Here, if the minimum coding unit is a coding unit in which the maximum coding unit is split four times, 5 depth levels of depths 0, 1, 2, 3 and 4 exist, and thus the first maximum depth may be set to 4, and the second maximum depth may be set to 5.

Prediction encoding and transformation may be performed according to the maximum coding unit. The prediction encoding and the transformation are also performed based on the deeper coding units according to a depth equal to or depths less than the maximum depth, according to the maximum coding unit.

Since the number of deeper coding units increases whenever the maximum coding unit is split according to depths, encoding including the prediction encoding and the transformation is performed on all of the deeper coding units generated as the depth deepens. For convenience of description, the prediction encoding and the transformation will now be described based on a coding unit of a current depth, in a maximum coding unit.

The video encoding apparatus 100 may variously select a size or shape of a data unit for encoding the image data. In order to encode the image data, operations, such as prediction encoding, transformation, and entropy encoding, are performed, and at this time, the same data unit may be used for all operations or different data units may be used for each operation.

For example, the video encoding apparatus 100 may select not only a coding unit for encoding the image data, but also a data unit different from the coding unit so as to perform the prediction encoding on the image data in the coding unit.

In order to perform prediction encoding in the maximum coding unit, the prediction encoding may be performed based on a coding unit corresponding to a coded depth, i.e., based on a coding unit that is no longer split to coding units corresponding to a lower depth. Hereinafter, the coding unit that is no longer split and becomes a basis unit for prediction encoding will now be referred to as a 'prediction unit'. A partition obtained by splitting the prediction unit may include a prediction unit or a data unit obtained by splitting at least one of a height and a width of the prediction unit.

For example, when a coding unit of 2Nx2N (where N is a positive integer) is no longer split and becomes a prediction unit of 2Nx2N, and a size of a partition may be 2Nx2N, 2NxN, Nx2N, or NxN. Examples of a partition type include symmetrical partitions that are obtained by symmetrically splitting a height or width of the prediction unit, partitions obtained by asymmetrically splitting the height or width of the prediction unit, such as 1:n or n:1, partitions that are obtained by geometrically splitting the prediction unit, and partitions having arbitrary shapes.

A prediction mode of the prediction unit may be at least one of an intra mode, an inter mode, and a skip mode. For example, the intra mode or the inter mode may be performed on the partition of 2Nx2N, 2NxN, Nx2N, or NxN. Also, the skip mode may be performed only on the partition of 2Nx2N. The encoding is independently performed on one prediction unit in a coding unit, thereby selecting a prediction mode having a least encoding error.

The video encoding apparatus 100 may also perform the transformation on the image data in a coding unit based not only on the coding unit for encoding the image data, but also based on a data unit that is different from the coding unit.

In order to perform the transformation in the coding unit, the transformation may be performed based on a data unit having a size smaller than or equal to the coding unit. For example, the data unit for the transformation may include a data unit for an intra mode and a data unit for an inter mode.

A data unit used as a base of the transformation will now be referred to as a 'transformation unit'. Similarly to the coding unit, the transformation unit in the coding unit may be recursively split into smaller sized regions, so that the transformation unit may be determined independently in units of regions. Thus, residual data in the coding unit may be divided according to the transformation unit having the tree structure according to transformation depths.

A transformation depth indicating the number of splitting times to reach the transformation unit by splitting the height and width of the coding unit may also be set in the transformation unit. For example, in a current coding unit of 2Nx2N, a transformation depth may be 0 when the size of a transformation unit is 2Nx2N, may be 1 when the size of the transformation unit is thus NxN, and may be 2 when the size of the transformation unit is thus N/2xN/2. In other words, the transformation unit having the tree structure may be set according to the transformation depths.

Encoding information according to coding units corresponding to a coded depth requires not only information about the coded depth, but also about information related to prediction encoding and transformation. Accordingly, the coding unit determiner 120 not only determines a coded depth having a least encoding error, but also determines a partition type in a prediction unit, a prediction mode according to prediction units, and a size of a transformation unit for transformation.

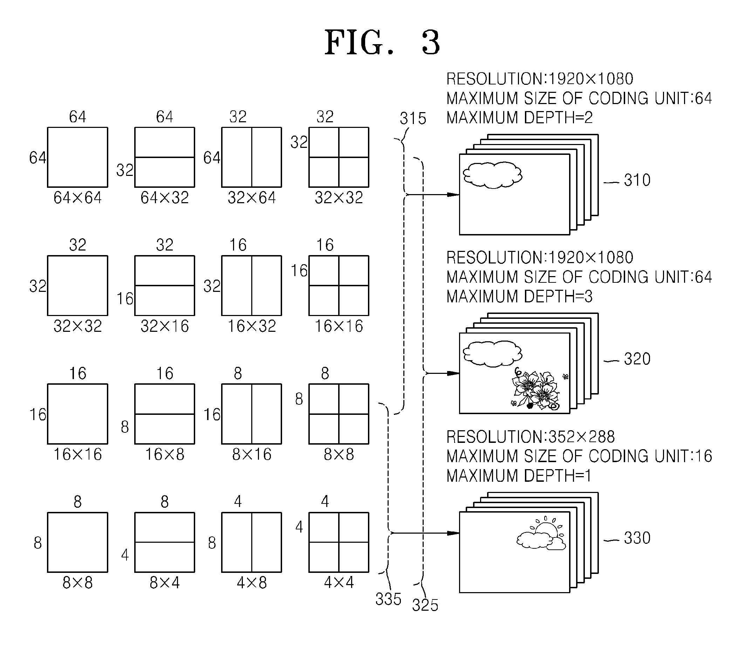

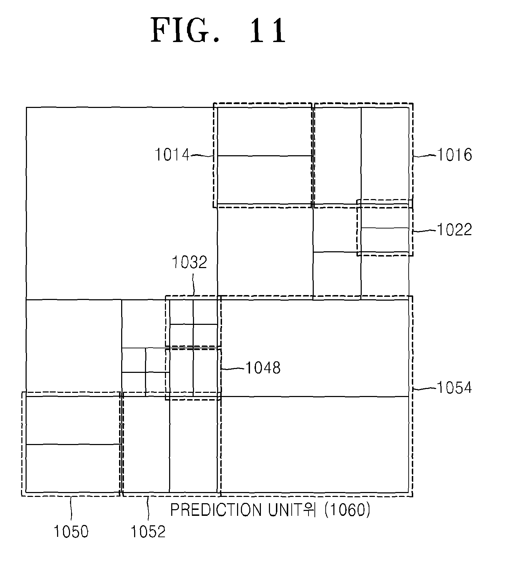

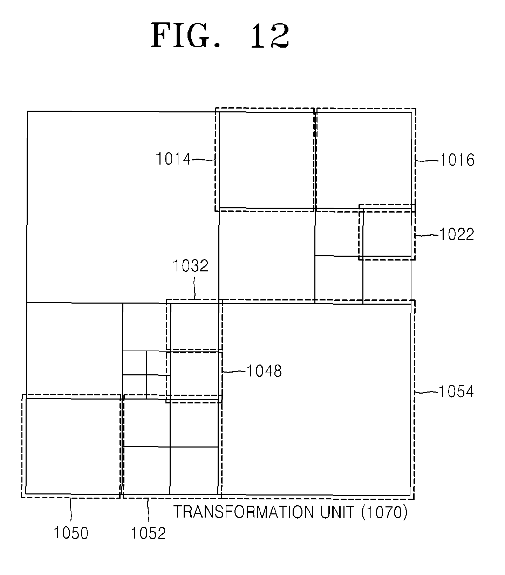

Coding units according to a tree structure in a maximum coding unit and a method of determining a partition, according to embodiments of the present invention, will be described in detail later with reference to FIGS. 3 through 12.

The coding unit determiner 120 may measure an encoding error of deeper coding units according to depths by using Rate-Distortion Optimization based on Lagrangian multipliers.

The output unit 130 outputs the image data of the maximum coding unit, which is encoded based on the at least one coded depth determined by the coding unit determiner 120, and information about the encoding mode according to the coded depth, in bitstreams.

The encoded image data may be obtained by encoding residual data of an image.

The information about the encoding mode according to coded depth may include information about the coded depth, about the partition type in the prediction unit, the prediction mode, and the size of the transformation unit.

The information about the coded depth may be defined by using split information according to depths, which indicates whether encoding is performed on coding units of a lower depth instead of a current depth. If the current depth of the current coding unit is the coded depth, image data in the current coding unit is encoded and output, and thus the split information may be defined not to split the current coding unit to a lower depth. Alternatively, if the current depth of the current coding unit is not the coded depth, the encoding is performed on the coding unit of the lower depth, and thus the split information may be defined to split the current coding unit to obtain the coding units of the lower depth.

If the current depth is not the coded depth, encoding is performed on the coding unit that is split into the coding unit of the lower depth. Since at least one coding unit of the lower depth exists in one coding unit of the current depth, the encoding is repeatedly performed on each coding unit of the lower depth, and thus the encoding may be recursively performed for the coding units having the same depth.

Since the coding units having a tree structure are determined for one maximum coding unit, and information about at least one encoding mode is determined for a coding unit of a coded depth, information about at least one encoding mode may be determined for one maximum coding unit. Also, a coded depth of the image data of the maximum coding unit may be different according to locations since the image data is hierarchically split according to depths, and thus information about the coded depth and the encoding mode may be set for the image data.

Accordingly, the output unit 130 may assign encoding information about a corresponding coded depth and an encoding mode to at least one of the coding unit, the prediction unit, and a minimum unit included in the maximum coding unit.

The minimum unit according to an embodiment of the present invention is a square data unit obtained by splitting the minimum coding unit constituting the lowermost depth by 4. Alternatively, the minimum unit may be a maximum square data unit that may be included in all of the coding units, prediction units, partition units, and transformation units included in the maximum coding unit.

For example, the encoding information output through the output unit 130 may be classified into encoding information according to coding units, and encoding information according to prediction units. The encoding information according to the coding units may include the information about the prediction mode and about the size of the partitions. The encoding information according to the prediction units may include information about an estimated direction of an inter mode, about a reference image index of the inter mode, about a motion vector, about a chroma component of an intra mode, and about an interpolation method of the intra mode. Also, information about a maximum size of the coding unit defined according to pictures, slices, or GOPs, and information about a maximum depth may be inserted into a header of a bitstream.

In the video encoding apparatus 100, the deeper coding unit may be a coding unit obtained by dividing a height or width of a coding unit of an upper depth, which is one layer above, by two. In other words, when the size of the coding unit of the current depth is 2Nx2N, the size of the coding unit of the lower depth is NxN. Also, the coding unit of the current depth having the size of 2Nx2N may include maximum 4 of the coding unit of the lower depth.

Accordingly, the video encoding apparatus 100 may form the coding units having the tree structure by determining coding units having an optimum shape and an optimum size for each maximum coding unit, based on the size of the maximum coding unit and the maximum depth determined considering characteristics of the current picture. Also, since encoding may be performed on each maximum coding unit by using any one of various prediction modes and transformations, an optimum encoding mode may be determined considering characteristics of the coding unit of various image sizes.

Thus, if an image having high resolution or large data amount is encoded in a conventional macroblock, a number of macroblocks per picture excessively increases. Accordingly, a number of pieces of compressed information generated for each macroblock increases, and thus it is difficult to transmit the compressed information and data compression efficiency decreases. However, by using the video encoding apparatus 100, image compression efficiency may be increased since a coding unit is adjusted while considering characteristics of an image while increasing a maximum size of a coding unit while considering a size of the image.

FIG. 2 is a block diagram of a video decoding apparatus 200, according to an embodiment of the present invention.

The video decoding apparatus 200 includes a receiver 210, an image data and encoding information extractor 220, and an image data decoder 230. Definitions of various terms, such as a coding unit, a depth, a prediction unit, a transformation unit, and information about various encoding modes, for various operations of the video decoding apparatus 200 are identical to those described with reference to FIG. 1 and the video encoding apparatus 100.

The receiver 210 receives and parses a bitstream of an encoded video. The image data and encoding information extractor 220 extracts encoded image data for each coding unit from the parsed bitstream, wherein the coding units have a tree structure according to each maximum coding unit, and outputs the extracted image data to the image data decoder 230. The image data and encoding information extractor 220 may extract information about a maximum size of a coding unit of a current picture, from a header about the current picture.

Also, the image data and encoding information extractor 220 extracts information about a coded depth and an encoding mode for the coding units having a tree structure according to each maximum coding unit, from the parsed bitstream. The extracted information about the coded depth and the encoding mode is output to the image data decoder 230. In other words, the image data in a bit stream is split into the maximum coding unit so that the image data decoder 230 decodes the image data for each maximum coding unit.

The information about the coded depth and the encoding mode according to the maximum coding unit may be set for information about at least one coding unit corresponding to the coded depth, and information about an encoding mode may include information about a partition type of a corresponding coding unit corresponding to the coded depth, about a prediction mode, and a size of a transformation unit. Also, splitting information according to depths may be extracted as the information about the coded depth.

The information about the coded depth and the encoding mode according to each maximum coding unit extracted by the image data and encoding information extractor 220 is information about a coded depth and an encoding mode determined to generate a minimum encoding error when an encoder, such as the video encoding apparatus 100, repeatedly performs encoding for each deeper coding unit according to depths according to each maximum coding unit. Accordingly, the video decoding apparatus 200 may restore an image by decoding the image data according to a coded depth and an encoding mode that generates the minimum encoding error.

Since encoding information about the coded depth and the encoding mode may be assigned to a predetermined data unit from among a corresponding coding unit, a prediction unit, and a minimum unit, the image data and encoding information extractor 220 may extract the information about the coded depth and the encoding mode according to the predetermined data units. If information about a coded depth and encoding mode of a corresponding maximum coding unit is recorded according to predetermined data units, the predetermined data units to which the same information about the coded depth and the encoding mode is assigned may be inferred to be the data units included in the same maximum coding unit.

The image data decoder 230 restores the current picture by decoding the image data in each maximum coding unit based on the information about the coded depth and the encoding mode according to the maximum coding units. In other words, the image data decoder 230 may decode the encoded image data based on the extracted information about the partition type, the prediction mode, and the transformation unit for each coding unit from among the coding units having the tree structure included in each maximum coding unit. A decoding process may include a prediction including intra prediction and motion compensation, and an inverse transformation.

The image data decoder 230 may perform intra prediction or motion compensation according to a partition and a prediction mode of each coding unit, based on the information about the partition type and the prediction mode of the prediction unit of the coding unit according to coded depths.

Also, the image data decoder 230 may perform inverse transformation according to each transformation unit in the coding unit, based on the information about the size of the transformation unit of the coding unit according to coded depths, so as to perform the inverse transformation according to maximum coding units.

The image data decoder 230 may determine at least one coded depth of a current maximum coding unit by using split information according to depths. If the split information indicates that image data is no longer split in the current depth, the current depth is a coded depth. Accordingly, the image data decoder 230 may decode encoded data of at least one coding unit corresponding to the each coded depth in the current maximum coding unit by using the information about the partition type of the prediction unit, the prediction mode, and the size of the transformation unit for each coding unit corresponding to the coded depth.

In other words, data units containing the encoding information including the same split information may be gathered by observing the encoding information set assigned for the predetermined data unit from among the coding unit, the prediction unit, and the minimum unit, and the gathered data units may be considered to be one data unit to be decoded by the image data decoder 230 in the same encoding mode.

The video decoding apparatus 200 may obtain information about at least one coding unit that generates the minimum encoding error when encoding is recursively performed for each maximum coding unit, and may use the information to decode the current picture. In other words, the coding units having the tree structure determined to be the optimum coding units in each maximum coding unit may be decoded.

Accordingly, even if image data has high resolution and a large amount of data, the image data may be efficiently decoded and restored by using a size of a coding unit and an encoding mode, which are adaptively determined according to characteristics of the image data, by using information about an optimum encoding mode received from an encoder.

A method of determining coding units having a tree structure, a prediction unit, and a transformation unit, according to an embodiment of the present invention, will now be described with reference to FIGS. 3 through 13.

FIG. 3 is a diagram for describing a concept of coding units according to an embodiment of the present invention.

A size of a coding unit may be expressed in width x height, and may be 64x64, 32x32, 16x16, and 8x8. A coding unit of 64x64 may be split into partitions of 64x64, 64x32, 32x64, or 32x32, and a coding unit of 32x32 may be split into partitions of 32x32, 32x16, 16x32, or 16x16, a coding unit of 16x16 may be split into partitions of 16x16, 16x8, 8x16, or 8x8, and a coding unit of 8x8 may be split into partitions of 8x8, 8x4, 4x8, or 4x4.

In video data 310, a resolution is 1920x1080, a maximum size of a coding unit is 64, and a maximum depth is 2. In video data 320, a resolution is 1920x1080, a maximum size of a coding unit is 64, and a maximum depth is 3. In video data 330, a resolution is 352x288, a maximum size of a coding unit is 16, and a maximum depth is 1. The maximum depth shown in FIG. 3 denotes a total number of splits from a maximum coding unit to a minimum decoding unit.

If a resolution is high or a data amount is large, a maximum size of a coding unit may be large so as to not only increase encoding efficiency but also to accurately reflect characteristics of an image. Accordingly, the maximum size of the coding unit of the video data 310 and 320 having the higher resolution than the video data 330 may be 64.

Since the maximum depth of the video data 310 is 2, coding units 315 of the vide data 310 may include a maximum coding unit having a long axis size of 64, and coding units having long axis sizes of 32 and 16 since depths are deepened to two layers by splitting the maximum coding unit twice. Meanwhile, since the maximum depth of the video data 330 is 1, coding units 335 of the video data 330 may include a maximum coding unit having a long axis size of 16, and coding units having a long axis size of 8 since depths are deepened to one layer by splitting the maximum coding unit once.

Since the maximum depth of the video data 320 is 3, coding units 325 of the video data 320 may include a maximum coding unit having a long axis size of 64, and coding units having long axis sizes of 32, 16, and 8 since the depths are deepened to 3 layers by splitting the maximum coding unit three times. As a depth deepens, detailed information may be precisely expressed.

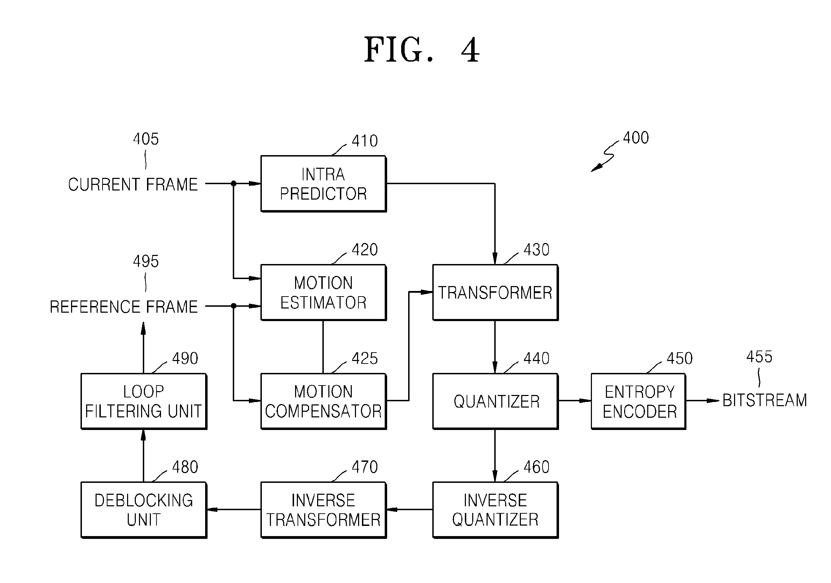

FIG. 4 is a block diagram of an image encoder 400 based on coding units, according to an embodiment of the present invention.

The image encoder 400 performs operations of the coding unit determiner 120 of the video encoding apparatus 100 to encode image data. In other words, an intra predictor 410 performs intra prediction on coding units in an intra mode, from among a current frame 405, and a motion estimator 420 and a motion compensator 425 performs inter estimation and motion compensation on coding units in an inter mode from among the current frame 405 by using the current frame 405, and a reference frame 495.

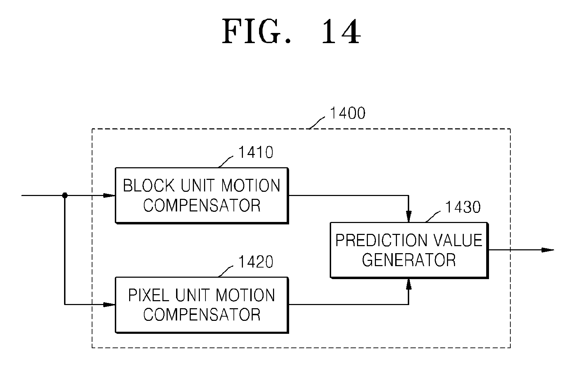

Data output from the intra predictor 410, the motion estimator 420, and the motion compensator 425 is output as a quantized transformation coefficient through a transformer 430 and a quantizer 440. Specifically, during bi-directional motion prediction and compensation, the motion estimator 420 and the motion compensator 425 perform pixel unit bi-directional motion compensation, in addition to block-based bi-directional motion prediction and compensation. This will be described in detail below with reference to FIG. 14.

The quantized transformation coefficient is restored as data in a spatial domain through an inverse quantizer 460 and an inverse transformer 470, and the restored data in the spatial domain is output as the reference frame 495 after being post-processed through a deblocking unit 480 and a loop filtering unit 490. The quantized transformation coefficient may be output as a bitstream 455 through an entropy encoder 450.

In order for the image encoder 400 to be applied in the video encoding apparatus 100, all elements of the image encoder 400, i.e., the intra predictor 410, the motion estimator 420, the motion compensator 425, the transformer 430, the quantizer 440, the entropy encoder 450, the inverse quantizer 460, the inverse transformer 470, the deblocking unit 480, and the loop filtering unit 490 perform operations based on each coding unit from among coding units having a tree structure while considering the maximum depth of each maximum coding unit.

Specifically, the intra predictor 410, the motion estimator 420, and the motion compensator 425 determines partitions and a prediction mode of each coding unit from among the coding units having a tree structure while considering the maximum size and the maximum depth of a current maximum coding unit, and the transformer 430 determines the size of the transformation unit in each coding unit from among the coding units having a tree structure.

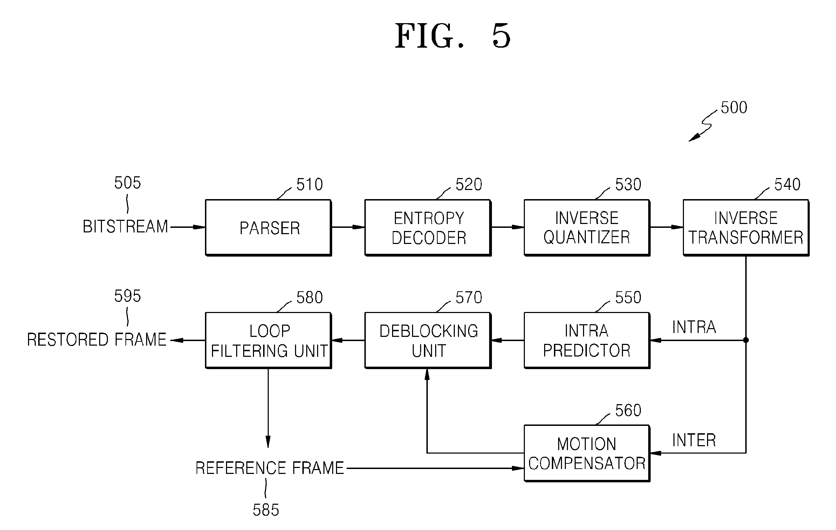

FIG. 5 is a block diagram of an image decoder 500 based on coding units, according to an embodiment of the present invention.

A parser 510 parses encoded image data to be decoded and information about encoding required for decoding from a bitstream 505. The encoded image data is output as inverse quantized data through an entropy decoder 520 and an inverse quantizer 530, and the inverse quantized data is restored to image data in a spatial domain through an inverse transformer 540.

An intra predictor 550 performs intra prediction on coding units in an intra mode with respect to the image data in the spatial domain, and a motion compensator 560 performs motion compensation on coding units in an inter mode by using a reference frame 585. Specifically, during bi-directional motion compensation, the motion compensator 560 performs pixel unit bi-directional motion compensation in addition to block-based bi-directional motion compensation. This will be described in detail below with reference to FIG. 14.

The image data in the spatial domain, which passed through the intra predictor 550 and the motion compensator 560, may be output as a restored frame 595 after being post-processed through a deblocking unit 570 and a loop filtering unit 580. Also, the image data that is post-processed through the deblocking unit 570 and the loop filtering unit 580 may be output as the reference frame 585.

In order to decode the image data in the image data decoder 230 of the video decoding apparatus 200, the image decoder 500 may perform operations that are performed after the parser 510.

In order for the image decoder 500 to be applied in the video decoding apparatus 200, all elements of the image decoder 500, i.e., the parser 510, the entropy decoder 520, the inverse quantizer 530, the inverse transformer 540, the intra predictor 550, the motion compensator 560, the deblocking unit 570, and the loop filtering unit 580 perform operations based on coding units having a tree structure for each maximum coding unit.

Specifically, the intra prediction 550 and the motion compensator 560 perform operations based on partitions and a prediction mode for each of the coding units having a tree structure, and the inverse transformer 540 perform operations based on a size of a transformation unit for each coding unit.

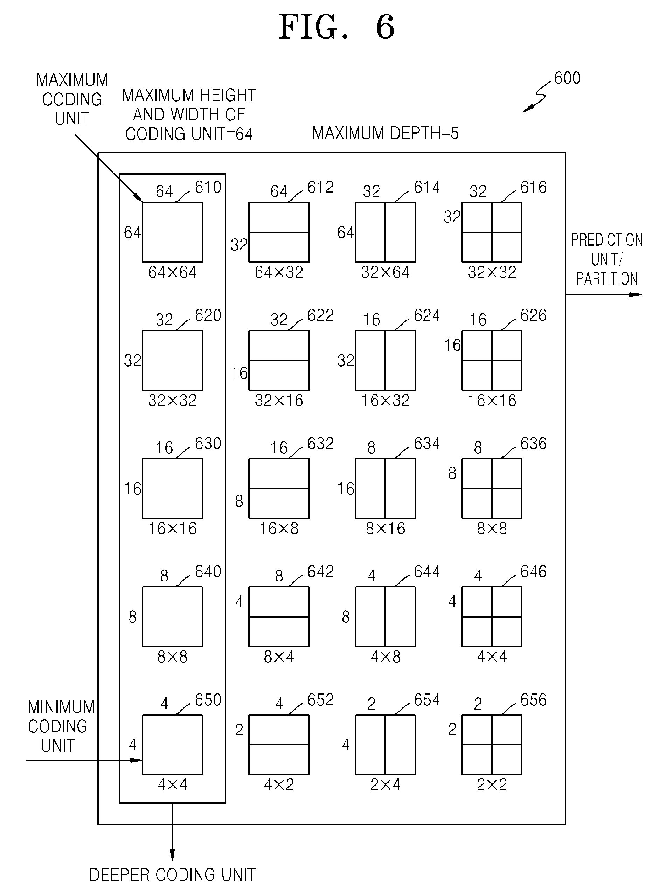

FIG. 6 is a diagram illustrating deeper coding units according to depths, and partitions, according to an embodiment of the present invention.

The video encoding apparatus 100 and the video decoding apparatus 200 use hierarchical coding units so as to consider characteristics of an image. A maximum height, a maximum width, and a maximum depth of coding units may be adaptively determined according to the characteristics of the image, or may be differently set by a user. Sizes of deeper coding units according to depths may be determined according to the predetermined maximum size of the coding unit.

In a hierarchical structure 600 of coding units, according to an embodiment of the present invention, the maximum height and the maximum width of the coding units are each 64, and the maximum depth is 4. Since a depth deepens along a vertical axis of the hierarchical structure 600, a height and a width of the deeper coding unit are each split. Also, a prediction unit and partitions, which are bases for prediction encoding of each deeper coding unit, are shown along a horizontal axis of the hierarchical structure 600.

In other words, a coding unit 610 is a maximum coding unit in the hierarchical structure 600, wherein a depth is 0 and a size, i.e., a height by width, is 64x64. The depth deepens along the vertical axis, and a coding unit 620 having a size of 32x32 and a depth of 1, a coding unit 630 having a size of 16x16 and a depth of 2, a coding unit 640 having a size of 8x8 and a depth of 3, and a coding unit 650 having a size of 4x4 and a depth of 4 exist. The coding unit 650 having the size of 4x4 and the depth of 4 is a minimum coding unit.

The prediction unit and the partitions of a coding unit are arranged along the horizontal axis according to each depth. In other words, if the coding unit 610 having the size of 64x64 and the depth of 0 is a prediction unit, the prediction unit may be split into partitions include in the encoding unit 610, i.e. a partition 610 having a size of 64x64, partitions 612 having the size of 64x32, partitions 614 having the size of 32x64, or partitions 616 having the size of 32x32.

Similarly, a prediction unit of the coding unit 620 having the size of 32x32 and the depth of 1 may be split into partitions included in the coding unit 620, i.e. a partition 620 having a size of 32x32, partitions 622 having a size of 32x16, partitions 624 having a size of 16x32, and partitions 626 having a size of 16x16.

Similarly, a prediction unit of the coding unit 630 having the size of 16x16 and the depth of 2 may be split into partitions included in the coding unit 630, i.e. a partition having a size of 16x16 included in the coding unit 630, partitions 632 having a size of 16x8, partitions 634 having a size of 8x16, and partitions 636 having a size of 8x8.

Similarly, a prediction unit of the coding unit 640 having the size of 8x8 and the depth of 3 may be split into partitions included in the coding unit 640, i.e. a partition having a size of 8x8 included in the coding unit 640, partitions 642 having a size of 8x4, partitions 644 having a size of 4x8, and partitions 646 having a size of 4x4.

The coding unit 650 having the size of 4x4 and the depth of 4 is the minimum coding unit and a coding unit of the lowermost depth. A prediction unit of the coding unit 650 is only assigned to a partition having a size of 4x4.

In order to determine the at least one coded depth of the coding units constituting the maximum coding unit 610, the coding unit determiner 120 of the video encoding apparatus 100 performs encoding for coding units corresponding to each depth included in the maximum coding unit 610.

A number of deeper coding units according to depths including data in the same range and the same size increases as the depth deepens. For example, four coding units corresponding to a depth of 2 are required to cover data that is included in one coding unit corresponding to a depth of 1. Accordingly, in order to compare encoding results of the same data according to depths, the coding unit corresponding to the depth of 1 and four coding units corresponding to the depth of 2 are each encoded.

In order to perform encoding for a current depth from among the depths, a least encoding error may be selected for the current depth by performing encoding for each prediction unit in the coding units corresponding to the current depth, along the horizontal axis of the hierarchical structure 600. Alternatively, the minimum encoding error may be searched for by comparing the least encoding errors according to depths, by performing encoding for each depth as the depth deepens along the vertical axis of the hierarchical structure 600. A depth and a partition having the minimum encoding error in the coding unit 610 may be selected as the coded depth and a partition type of the coding unit 610.

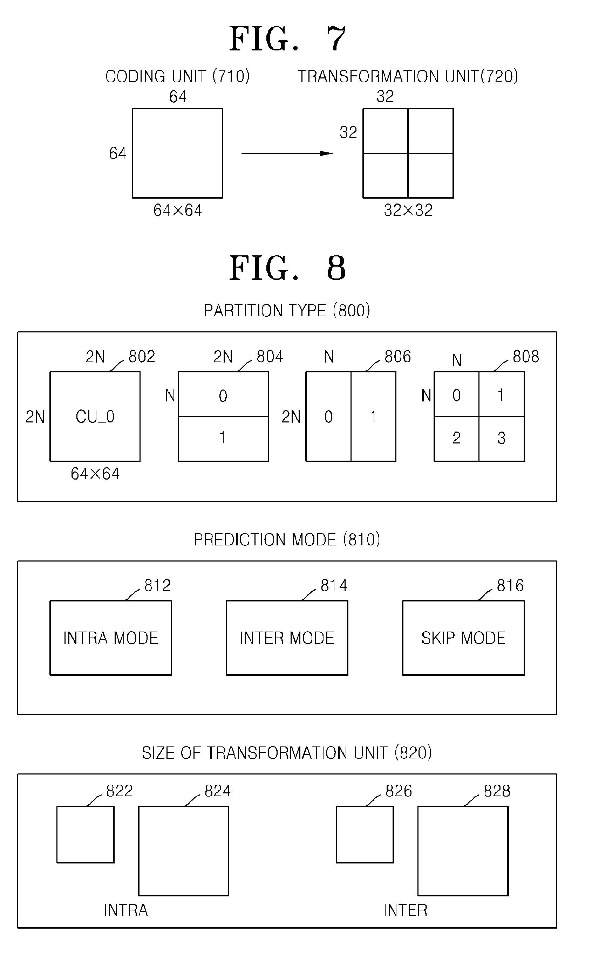

FIG. 7 is a diagram for describing a relationship between a coding unit 710 and transformation units 720, according to an embodiment of the present invention.

The video encoding apparatus 100 or the video decoding apparatus 200 encodes or decodes an image according to coding units having sizes smaller than or equal to a maximum coding unit for each maximum coding unit. Sizes of transformation units for transformation during encoding may be selected based on data units that are not larger than a corresponding coding unit.

For example, in the video encoding apparatus 100 or the video decoding apparatus 200, if a size of the coding unit 710 is 64x64, transformation may be performed by using the transformation units 720 having a size of 32x32.

Also, data of the coding unit 710 having the size of 64x64 may be encoded by performing the transformation on each of the transformation units having the size of 32x32, 16x16, 8x8, and 4x4, which are smaller than 64x64, and then a transformation unit having the least coding error may be selected.

FIG. 8 is a diagram for describing encoding information of coding units corresponding to a coded depth, according to an embodiment of the present invention.

The output unit 130 of the video encoding apparatus 100 may encode and transmit information 800 about a partition type, information 810 about a prediction mode, and information 820 about a size of a transformation unit for each coding unit corresponding to a coded depth, as information about an encoding mode.

The information 800 indicates information about a shape of a partition obtained by splitting a prediction unit of a current coding unit, wherein the partition is a data unit for prediction encoding the current coding unit. For example, a current coding unit CU_0 having a size of 2Nx2N may be split into any one of a partition 802 having a size of 2Nx2N, a partition 804 having a size of 2NxN, a partition 806 having a size of Nx2N, and a partition 808 having a size of NxN. Here, the information 800 about a partition type is set to indicate one of the partition 804 having a size of 2NxN, the partition 806 having a size of Nx2N, and the partition 808 having a size of NxN

The information 810 indicates a prediction mode of each partition. For example, the information 810 may indicate a mode of prediction encoding performed on a partition indicated by the information 800, i.e., an intra mode 812, an inter mode 814, or a skip mode 816.

The information 820 indicates a transformation unit to be based on when transformation is performed on a current coding unit. For example, the transformation unit may be a first intra transformation unit 822, a second intra transformation unit 824, a first inter transformation unit 826, or a second intra transformation unit 828.

The image data and encoding information extractor 220 of the video decoding apparatus 200 may extract and use the information 800, 810, and 820 for decoding, according to each deeper coding unit.

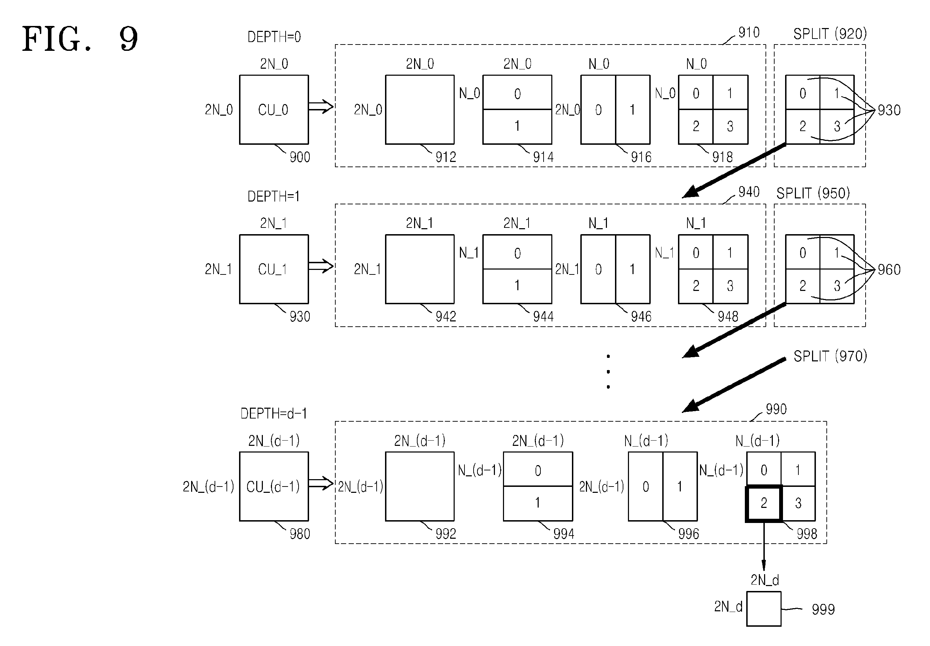

FIG. 9 is a diagram of deeper coding units according to depths, according to an embodiment of the present invention.

Split information may be used to indicate a change of a depth. The spilt information indicates whether a coding unit of a current depth is split into coding units of a lower depth.

A prediction unit 910 for prediction encoding a coding unit 900 having a depth of 0 and a size of 2N_0x2N_0 may include partitions of a partition type 912 having a size of 2N_0x2N_0, a partition type 914 having a size of 2N_0xN_0, a partition type 916 having a size of N_0x2N_0, and a partition type 918 having a size of N_0xN_0. FIG. 9 only illustrates the partition types 912 through 918 which are obtained by symmetrically splitting the prediction unit 910, but a partition type is not limited thereto, and the partitions of the prediction unit 910 may include asymmetrical partitions, partitions having a predetermined shape, and partitions having a geometrical shape.

Prediction encoding is repeatedly performed on one partition having a size of 2N_0x2N_0, two partitions having a size of 2N_0xN_0, two partitions having a size of N_0x2N_0, and four partitions having a size of N_0xN_0, according to each partition type. The prediction encoding in an intra mode and an inter mode may be performed on the partitions having the sizes of 2N_0x2N_0, N_0x2N_0, 2N_0xN_0, and N_0xN_0. The prediction encoding in a skip mode is performed only on the partition having the size of 2N_0x2N_0.

If an encoding error is smallest in one of the partition types 912 through 916, the prediction unit 910 may not be split into a lower depth.

If the encoding error is the smallest in the partition type 918, a depth is changed from 0 to 1 to split the partition type 918 in operation 920, and encoding is repeatedly performed on coding units 930 having a depth of 2 and a size of N_0xN_0 to search for a minimum encoding error.

A prediction unit 940 for prediction encoding the coding unit 930 having a depth of 1 and a size of 2N_1x2N_1 (=N_0xN_0) may include partitions of a partition type 942 having a size of 2N_1x2N_1, a partition type 944 having a size of 2N_1xN_1, a partition type 946 having a size of N_1x2N_1, and a partition type 948 having a size of N_1xN_1.

If an encoding error is the smallest in the partition type 948, a depth is changed from 1 to 2 to split the partition type 948 in operation 950, and encoding is repeatedly performed on coding units 960, which have a depth of 2 and a size of N_2xN_2 to search for a minimum encoding error.

When a maximum depth is d, split operation according to each depth may be performed up to when a depth becomes d-1, and split information may be encoded as up to when a depth is one of 0 to d-2. In other words, when encoding is performed up to when the depth is d-1 after a coding unit corresponding to a depth of d-2 is split in operation 970, a prediction unit 990 for prediction encoding a coding unit 980 having a depth of d-1 and a size of 2N_(d-1)x2N_ (d-1) may include partitions of a partition type 992 having a size of 2N_(d-1)x2N_(d-1), a partition type 994 having a size of 2N_(d-1)xN_(d-1), a partition type 996 having a size of N_(d-1)x2N_(d-1), and a partition type 998 having a size of N_(d-1)xN_(d-1).

Prediction encoding may be repeatedly performed on one partition having a size of 2N_(d-1)x2N_(d-1), two partitions having a size of 2N_(d-1)xN_(d-1), two partitions having a size of N_(d-1)x2N_(d-1), four partitions having a size of N_(d-1)xN_(d-1) from among the partition types 992 through 998 to search for a partition type having a minimum encoding error.

Even when the partition type 998 has the minimum encoding error, since a maximum depth is d, a coding unit CU_(d-1) having a depth of d-1 is no longer split to a lower depth, and a coded depth for the coding units constituting a current maximum coding unit 900 is determined to be d-1 and a partition type of the current maximum coding unit 900 may be determined to be N_(d-1)xN_(d-1). Also, since the maximum depth is d and a minimum coding unit 980 having a lowermost depth of d-1 is no longer split to a lower depth, split information for the minimum coding unit 980 is not set.

A data unit 999 may be a 'minimum unit' for the current maximum coding unit. A minimum unit according to an embodiment of the present invention may be a square data unit obtained by splitting a minimum coding unit 980 by 4. By performing the encoding repeatedly, the video encoding apparatus 100 may select a depth having the least encoding error by comparing encoding errors according to depths of the coding unit 900 to determine a coded depth, and set a corresponding partition type and a prediction mode as an encoding mode of the coded depth.

As such, the minimum encoding errors according to depths are compared in all of the depths of 1 through d, and a depth having the least encoding error may be determined as a coded depth. The coded depth, the partition type of the prediction unit, and the prediction mode may be encoded and transmitted as information about an encoding mode. Also, since a coding unit is split from a depth of 0 to a coded depth, only split information of the coded depth is set to 0, and split information of depths excluding the coded depth is set to 1.

The image data and encoding information extractor 220 of the video decoding apparatus 200 may extract and use the information about the coded depth and the prediction unit of the coding unit 900 to decode the partition 912. The video decoding apparatus 200 may determine a depth, in which split information is 0, as a coded depth by using split information according to depths, and use information about an encoding mode of the corresponding depth for decoding.

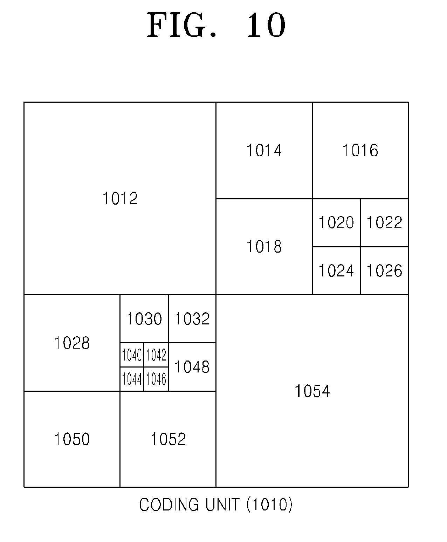

FIGS. 10 through 12 are diagrams for describing a relationship between coding units 1010, prediction units 1060, and transformation units 1070, according to an embodiment of the present invention.

The coding units 1010 are coding units having a tree structure, corresponding to coded depths determined by the video encoding apparatus 100, in a maximum coding unit. The prediction units 1060 are partitions of prediction units of each of the coding units 1010, and the transformation units 1070 are transformation units of each of the coding units 1010.

When a depth of a maximum coding unit is 0 in the coding units 1010, depths of coding units 1012 and 1054 are 1, depths of coding units 1014, 1016, 1018, 1028, 1050, and 1052 are 2, depths of coding units 1020, 1022, 1024, 1026, 1030, 1032, and 1048 are 3, and depths of coding units 1040, 1042, 1044, and 1046 are 4.

In the prediction units 1060, some encoding units 1014, 1016, 1022, 1032, 1048, 1050, 1052, and 1054 are obtained by splitting the coding units in the encoding units 1010. In other words, partition types in the coding units 1014, 1022, 1050, and 1054 have a size of 2NxN, partition types in the coding units 1016, 1048, and 1052 have a size of Nx2N, and a partition type of the coding unit 1032 has a size of NxN. Prediction units and partitions of the coding units 1010 are smaller than or equal to each coding unit.

Transformation or inverse transformation is performed on image data of the coding unit 1052 in the transformation units 1070 in a data unit that is smaller than the coding unit 1052. Also, the coding units 1014, 1016, 1022, 1032, 1048, 1050, and 1052 in the transformation units 1070 are different from those in the prediction units 1060 in terms of sizes and shapes. In other words, the video encoding and decoding apparatuses 100 and 200 may perform intra prediction, motion estimation, motion compensation, transformation, and inverse transformation individually on a data unit in the same coding unit.

Accordingly, encoding is recursively performed on each of coding units having a hierarchical structure in each region of a maximum coding unit to determine an optimum coding unit, and thus coding units having a recursive tree structure may be obtained. Encoding information may include split information about a coding unit, information about a partition type, information about a prediction mode, and information about a size of a transformation unit. Table 1 shows the encoding information that may be set by the video encoding and decoding apparatuses 100 and 200.

Table 1

| Split Information 0 (Encoding on Coding Unit having Size of 2Nx2N and Current Depth of d) | | | | | Split Information 1 |
|---|---|---|---|---|---|
| Prediction Mode | Partition Type | | Size of Transformation Unit | | |
| Intra Inter | Symmetrical Partition Type | Asymmetrical Partition Type | Split Information 0 of Transformation Unit | Split Information 1 of Transformation Unit | Repeatedly Encode Coding Units having Lower Depth of d+1 |
| Skip (Only 2Nx2N) | 2Nx2N 2NxN Nx2N NxN | 2NxnU 2NxnD nLx2N nRx2N | 2Nx2N | NxN (Symmetrical Type) N/2xN/2 (Asymmetrical Type) | |

The output unit 130 of the video encoding apparatus 100 may output the encoding information about the coding units having a tree structure, and the image data and encoding information extractor 220 of the video decoding apparatus 200 may extract the encoding information about the coding units having a tree structure from a received bitstream.

Split information indicates whether a current coding unit is split into coding units of a lower depth. If split information of a current depth d is 0, a depth, in which a current coding unit is no longer split into a lower depth, is a coded depth, and thus information about a partition type, prediction mode, and a size of a transformation unit may be defined for the coded depth. If the current coding unit is further split according to the split information, encoding is independently performed on four split coding units of a lower depth.

A prediction mode may be one of an intra mode, an inter mode, and a skip mode. The intra mode and the inter mode may be defined in all partition types, and the skip mode is defined only in a partition type having a size of 2Nx2N.

The information about the partition type may indicate symmetrical partition types having sizes of 2Nx2N, 2NxN, Nx2N, and NxN, which are obtained by symmetrically splitting a height or a width of a prediction unit, and asymmetrical partition types having sizes of 2NxnU, 2NxnD, nLx2N, and nRx2N, which are obtained by asymmetrically splitting the height or width of the prediction unit. The asymmetrical partition types having the sizes of 2NxnU and 2NxnD may be respectively obtained by splitting the height of the prediction unit in 1:3 and 3:1, and the asymmetrical partition types having the sizes of nLx2N and nRx2N may be respectively obtained by splitting the width of the prediction unit in 1:3 and 3:1

The size of the transformation unit may be set to be two types in the intra mode and two types in the inter mode. In other words, if split information of the transformation unit is 0, the size of the transformation unit may be 2Nx2N, which is the size of the current coding unit. If split information of the transformation unit is 1, the transformation units may be obtained by splitting the current coding unit. Also, if a partition type of the current coding unit having the size of 2Nx2N is a symmetrical partition type, a size of a transformation unit may be NxN, and if the partition type of the current coding unit is an asymmetrical partition type, the size of the transformation unit may be N/2xN/2.

The encoding information about coding units having a tree structure may include at least one of a coding unit corresponding to a coded depth, a prediction unit, and a minimum unit. The coding unit corresponding to the coded depth may include at least one of a prediction unit and a minimum unit containing the same encoding information.

Accordingly, it is determined whether adjacent data units are included in the same coding unit corresponding to the coded depth by comparing encoding information of the adjacent data units. Also, a corresponding coding unit corresponding to a coded depth is determined by using encoding information of a data unit, and thus a distribution of coded depths in a maximum coding unit may be determined.

Accordingly, if a current coding unit is predicted based on encoding information of adjacent data units, encoding information of data units in deeper coding units adjacent to the current coding unit may be directly referred to and used.

Alternatively, if a current coding unit is predicted based on encoding information of adjacent data units, data units adjacent to the current coding unit are searched using encoded information of the data units, and the searched adjacent coding units may be referred for predicting the current coding unit.

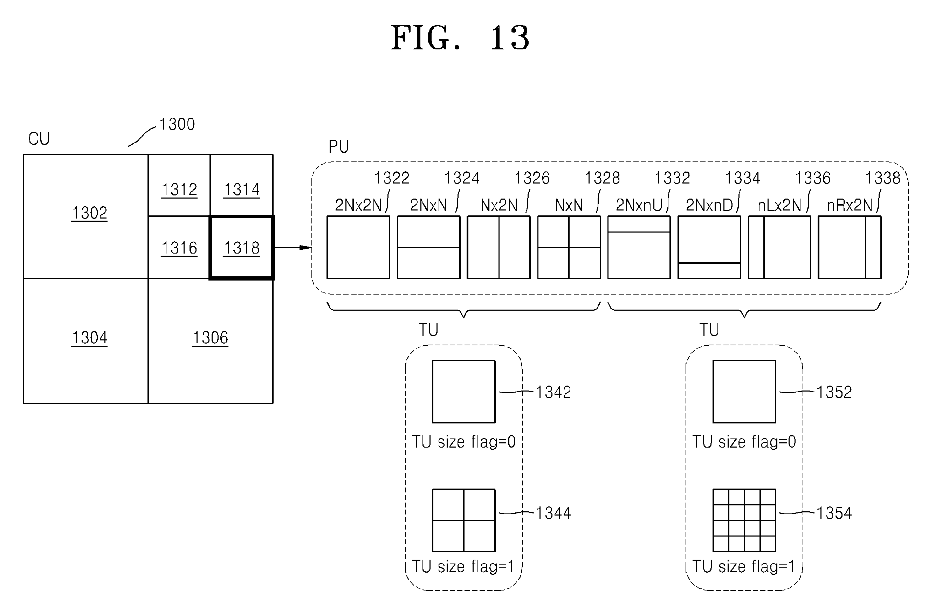

FIG. 13 is a diagram for describing a relationship between a coding unit, a prediction unit or a partition, and a transformation unit, according to encoding mode information of Table 1.

A maximum coding unit 1300 includes coding units 1302, 1304, 1306, 1312, 1314, 1316, and 1318 of coded depths. Here, since the coding unit 1318 is a coding unit of a coded depth, split information may be set to 0. Information about a partition type of the coding unit 1318 having a size of 2Nx2N may be set to be one of a partition type 1322 having a size of 2Nx2N, a partition type 1324 having a size of 2NxN, a partition type 1326 having a size of Nx2N, a partition type 1328 having a size of NxN, a partition type 1332 having a size of 2NxnU, a partition type 1334 having a size of 2NxnD, a partition type 1336 having a size of nLx2N, and a partition type 1338 having a size of nRx2N.

When the partition type is set to be symmetrical, i.e. the partition type 1322, 1324, 1326, or 1328, a transformation unit 1342 having a size of 2Nx2N is set if split information (TU size flag) of a transformation unit is 0, and a transformation unit 1344 having a size of NxN is set if a TU size flag is 1.

When the partition type is set to be asymmetrical, i.e., the partition type 1332, 1334, 1336, or 1338, a transformation unit 1352 having a size of 2Nx2N is set if a TU size flag is 0, and a transformation unit 1354 having a size of N/2xN/2 is set if a TU size flag is 1.

Processes of motion compensation performed in the motion compensator 425 of the video encoding apparatus 100 of FIG. 4 and the motion compensator 560 of the video decoding apparatus 200 will now be described in detail. Hereinafter, the prediction unit described above will be referred to as a block.

Conventional motion prediction and compensation methods use a block matching algorithm generating a prediction value by selecting a region most similar to a currently encoded macroblock from a reference frame by using a rectangular block having a predetermined size, for example, a 16x16 macroblock. For example, according to conventional bi-directional motion prediction and compensation methods, a region most similar to a current block to be encoded is searched for from a previous frame P0 and a following frame P1, and a prediction value of the current block is generated by using an average value of pixels in the region found in the previous frame P1 and the region found in the following frame P1. In conventional block based motion prediction and compensation methods, motion is relatively accurately searched for in most video sequences, but since prediction and compensation are performed based on a whole block, a small moving region is difficult to be efficiently predicted if the small moving region exists in a block. However, pixel unit motion prediction and compensation performed to predict a small motion in a block are not efficient because the number of bits required to encode motion vector information of each pixel is excessively increased. Accordingly, a method of encoding an image, according to an embodiment of the present invention, includes additionally performing pixel unit bi-directional motion compensation based on results of block-based bi-directional motion prediction and compensation without a high increase in the number of bits required to encode motion information.

FIG. 14 is a block diagram of a motion compensator 1400 according to an embodiment of the present invention. The motion compensator 1400 of FIG. 14 corresponds to the motion compensator 425 of the video encoding apparatus 100 of FIG. 4.

Referring to FIG. 14, the motion compensator 1400 includes a block unit motion compensator 1410, a pixel unit motion compensator 1420, and a prediction value generator 1430.

The block unit motion compensator 1410 performs block unit bi-directional motion compensation on a current block to be encoded, by using bi-directional motion vectors determined by a motion estimator 420 of FIG. 4.

The pixel unit motion compensator 1420 additionally performs pixel unit motion compensation on each pixel of the current block that is bi-directionally motion compensated in a block unit, by using pixels of reference pictures indicated by the bi-directional motion vectors.

The prediction value generator 1430 generates a final bi-directional motion prediction value of the current block by using results of the block unit bi-directional motion compensation and pixel unit motion compensation. Hereinafter, processes of block unit bi-directional motion prediction and compensation and pixel unit bi-directional motion compensation, according to embodiments of the present invention, will be described in detail.

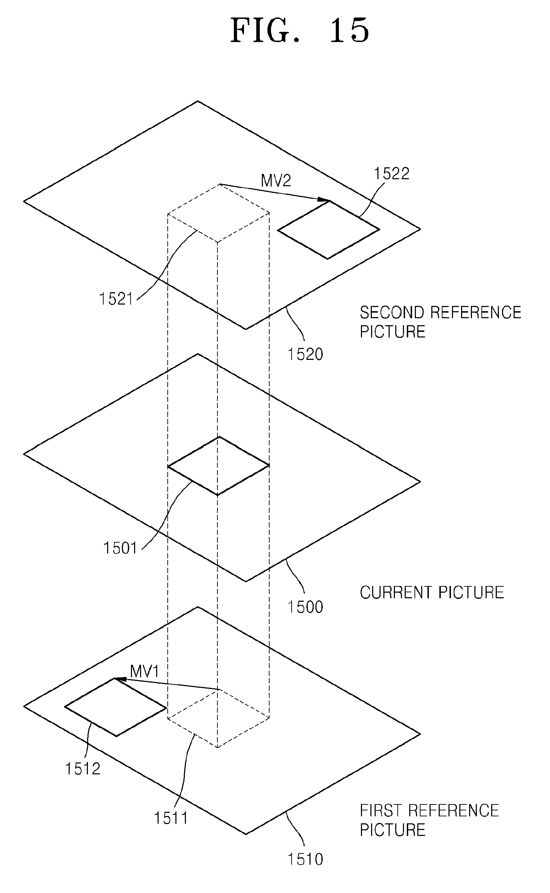

FIG. 15 is a reference diagram for describing processes of block-based bi-directional motion prediction and compensation, according to an embodiment of the present invention.

Referring to FIGS. 4 and 15, the motion estimator 420 performs bi-directional motion prediction to search for a region most similar to a current block 1501 to be encoded in a current picture 1500 from a first reference picture 1510 and a second reference picture 1520. Here, it is assumed that the first reference picture 1510 is a previous picture of the current picture 1500 and the second reference picture 1520 is a following picture of the current picture 1500. Upon performing the bi-directional motion prediction, the motion estimator 420 determines a first corresponding region 1512 most similar to the current block 1501 in the first reference picture 1510 and a second corresponding region 1522 most similar to the current block 1501 in the second reference picture 1520. Also, the motion estimator 420 determines a first motion vector MV1 based on a location difference between a block 1511 at the same location as the current block 1501 in the first reference picture 1510 and the first corresponding region 1512, and a second motion vector MV2 based on a location difference between a block 1521 at the same location as the current block 1501 in the second reference picture 1520 and the second corresponding region 1522.

The block unit motion compensator 1410 performs block unit bi-directional motion compensation on the current block 1501 by using the first and second motion vectors MV1 and MV2. For example, when P0(i,j) denotes a pixel value of the first reference picture 1510 located at (i,j) wherein i and j are each an integer, P1(i,j) denotes a pixel value of the second reference picture 1520 located at (i,j), MV1=(MVx1,MVy1), and MV2=(MVx2, MVy2), a block unit bi-directional motion compensation value P_BiPredBlock(i,j) of a pixel located at (i,j) of the current block 1501 may be calculated according to equation, P_BiPredBlock(i,j)={P0(i+MVx1, j+MVy1)+P1(i+MVx2, j+MVy2)}/2. As such, the block unit motion compensator 1410 performs block unit motion compensation on the current block 1501 by using an average value or a weighted sum of pixels of the first and second corresponding regions 1512 and 1522 respectively indicated by the first and second motion vectors MV1 and MV2.

The pixel unit motion compensator 1420 performs pixel unit motion compensation on the current block 1501 based on an optical flow of pixels of the first and second reference pictures 1510 and 1520.

An optical flow means a pattern of apparent motion of an object or surface generated due to a relative movement between an observer (eyes or a camera) and a scene. In a video sequence, the optical flow may be expressed by calculating motion between frames obtained at predetermined times t and t+Δt. I(x,y,t) denotes a pixel value located at (x,y) in the frame at the predetermined time t. In other words, I(x,y,t) is a value that spatio-temporally changes. Equation 1 below is obtained by differentiating I(x,y,t) according to time t.

[Equation 1]

$$ \frac{dI}{dt} = \frac{\partial I}{\partial x}\frac{dx}{dt} + \frac{\partial I}{\partial y}\frac{dy}{dt} + \frac{\partial I}{\partial t} $$

When it is assumed that a pixel value changes according to motion with respect to a small moving region in a block but does not change according to time, dI/dt is 0. Also, when Vx denotes a displacement vector in an x-axis direction of the pixel value I(x,y,t) and Vy denotes a displacement vector in a y-axis direction of the pixel value I(x,y,t) in dx/dt, Equation 1 may be represented according to Equation 2 below.

[Equation 2]

$$ \frac{\partial I}{\partial t} + Vx \cdot \frac{\partial I}{\partial x} + Vy \cdot \frac{\partial I}{\partial y} = 0 $$

Here, sizes of the displacement vector Vx in the x-axis direction and displacement vector Vy in the y-axis direction may have a value smaller than pixel accuracy used in bi-directional motion prediction. For example, when pixel accuracy is 1/4 during bi-directional motion prediction, the sizes of displacement vectors Vx and Vy may have a value smaller than 1/4.

The pixel unit motion compensator 1420 according to an embodiment of the present invention calculates the displacement vectors Vx and Vy according to Equation 2, and performs pixel unit motion compensation by using the displacement vectors Vx and Vy. Since the pixel value I(x,y,t) is a value of an original signal in Equation 2, massive overhead may be generated during encoding when the value of the original signal is used as it is. Accordingly, the pixel unit motion compensator 1420 calculates the displacement vectors Vx and Vy according to Equation 2 by using the pixels of the first and second reference pictures 1510 and 1520 determined based on the block unit bi-directional motion prediction.

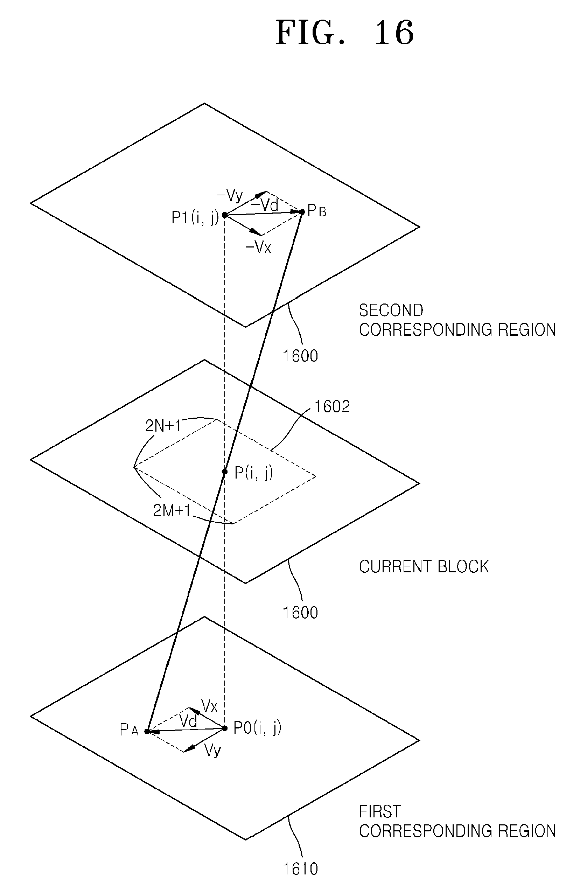

FIG. 16 is a reference diagram for describing a process of performing pixel unit motion compensation, according to an embodiment of the present invention.

In FIG. 16, it is assumed that a first corresponding region 1610 and a second corresponding region 1620 respectively correspond to the first corresponding region 1512 and the second corresponding region 1522 of FIG. 15, and are shifted by using the first and second motion vectors MV1 and MV2 so as to overlap a current block 1600. Also, P(i,j) denotes a pixel located at (i,j) bi-directionally predicted in the current block 1600, wherein i and j are each an integer, P0(i,j) denotes a pixel value of a first corresponding pixel of a first reference picture corresponding to the pixel P(i,j), and P1(i,j) denotes a pixel value of a second corresponding pixel of a second reference picture corresponding to the pixel P(i,j). In other words, the pixel value P0(i,j) of the first corresponding pixel corresponds to a pixel value of the pixel P(i, j) of the current block 1600 determined by a first motion vector MV1 indicating a first reference picture, and the pixel value P1(i,j) of the second corresponding pixel corresponds to a pixel value of the pixel P(i,j) of the current block 1600 determined by a second motion vector MV2 indicating a second reference picture.

Also, GradX0(i,j) denotes a horizontal direction gradient of the first corresponding pixel, GradY0(i,j) denotes a vertical direction gradient of the first corresponding pixel, GradX1(i,j) denotes a horizontal direction gradient of the second corresponding pixel, and GradY1(i,j) denotes a vertical direction gradient of the second corresponding pixel. Also, d0 denotes a temporal distance between a current picture of the current block 1600 and the first reference picture of the first corresponding region 1610 and d1 denotes a temporal distance between the current picture and the second reference picture of the second corresponding region 1620.

When d0 and d1 are 1, $\dfrac{\partial I}{\partial t}$ in Equation 2 may approximate to the amount of change in the pixel value P0 (i,j) of the first corresponding pixel and the pixel value P1(i,j) of the second corresponding pixel according to time, as shown in Equation 3 below.

[Equation 3]

$$\frac{\partial I}{\partial t} \approx (p0(i,j)\text{-}p1(i,j))/2$$

The gradients $\partial I/\partial x$ and $\partial I/\partial y$ in Equation 2 may respectively approximate to an average value of horizontal direction gradients of the first and second corresponding pixels and an average value of vertical direction gradients of the first and second corresponding pixels according to Equations 4 and 5 below.

[Equation 4]

$$\frac{\partial I}{\partial x} \approx (GradX0(i,j)\text{+}GradX1(i,j))/2$$

[Equation 5]

$$\frac{\partial I}{\partial y} \approx (GradY0(i,j)\text{+}GradY1(i,j))/2$$

Equation 2 may be arranged as Equation 6 below by using Equations 3 through 5.

[Equation 6]

$$P0(i,j)\text{-}P1(i,j)+Vx(i,j)\cdot(GradX0(i,j)+GradX1(i,j))+Vy(i,j)\cdot(GradY0(i,j)+GradY1(i,j))=0$$

In Equation 6, since the displacement vector Vx and the displacement vector Vy may change according to a location of the current pixel P(i,j), i.e., are dependent upon (i,j), the displacement vectors Vx and Vy may also be respectively represented by Vx(i,j) and Vy(i,j).

Meanwhile, if it is assumed that there is a small uniform movement in a video sequence in FIG. 16, it is assumed that a pixel of the first corresponding region 1610 of the first reference picture most similar to the current pixel P(i,j) that is pixel unit bi-directional motion compensated is not the first corresponding pixel P0(i,j) but a first displacement corresponding pixel PA obtained by moving the first corresponding pixel P0(i,j) by a predetermined displacement vector Vd. Since it is assumed that there is the small uniform movement in the video sequence, it may be assumed that a pixel most similar to the current pixel P(i,j) in the second corresponding region 1620 of the second reference picture is a second displacement corresponding pixel PB obtained by moving the second corresponding pixel P1(i,j) by -Vd. The predetermined displacement vector Vd consists of the displacement vector Vx in the x-axis direction and the displacement vector Vy in the y-axis direction, and thus Vd=(Vx, Vy). Accordingly, the pixel unit motion compensator 1420 according to an embodiment of the present invention calculates the displacement vectors Vx and Vy forming the predetermined displacement vector Vd, and performs pixel unit motion compensation again on a value obtained via block unit bi-directional motion compensation.

The first displacement corresponding pixel PA and the second displacement corresponding pixel PB may be respectively defined according to Equations 7 and 8, by using the displacement vector Vx in the x-axis direction, the displacement vector Vy in the y-axis direction, the horizontal direction gradient GradX0(i,j) of the first corresponding pixel, the vertical direction gradient GradY0(i,j) of the first corresponding pixel, the horizontal direction gradient GradX1(i,j) of the second corresponding pixel, and the vertical direction gradient GradY1(i,j) of the second corresponding pixel.

[Equation 7]

$$PA = P0(i,j) + Vx(i,j) \cdot GradX0(i,j) + Vy(i,j) \cdot GradY0(i,j)$$

[Equation 8]

$$PB = P1(i,j) - Vx(i,j) \cdot GradX1(i,j) - Vy(i,j) \cdot GradY1(i,j)$$

When $\Delta ij$ denotes a difference between the first displacement corresponding pixel PA and the second displacement corresponding pixel PB, $\Delta ij$ may be calculated according to Equation 9 below.

[Equation 9]

$$\Delta ij = PA - PB = P0(i,j) - P1(i,j) + Vx(i,j) \cdot (GradX0(i,j) + GradX1(i,j)) + Vy(i,j) \cdot (GradY0(i,j) + GradY1(i,j))$$

Comparing Equations 6 and 9, Equation 6 shows a case when $\Delta ij$ is 0, i.e., when values of the first displacement corresponding pixel PA and the second displacement corresponding pixel PB are the same.

The pixel unit motion compensator 1420 performs pixel unit motion compensation by using an average value or weighted sum of the values of the first and second displacement corresponding pixels PA and PB of Equations 7 and 8, and at this time, in order to calculate Equations 7 and 8, the displacement vectors Vx and Vy, the horizontal direction gradients GradX0(i,j), the vertical direction gradient GradY0(i,j), the horizontal direction gradient GradX1(i,j), and the vertical direction gradient GradY1(i,j) need to be determined. As described below, a gradient of each corresponding pixel may be determined by calculating the amount of change in pixel values at a sub-pixel location in horizontal and vertical directions of the first and second corresponding pixels, or may be calculated by using a predetermined filter.

First, processes of determining the displacement vector Vx in the x-axis direction and the displacement vector Vx in the y-axis direction will be described.

The pixel unit motion compensator 1420 determines the displacement vectors Vx and Vy that minimize $\Delta ij$ in a window $\Omega ij$ 1602 having a predetermined size and including adjacent pixels around the current pixel P(i,j) that is bi-directional motion compensated. It is preferable that $\Delta ij$ is 0, but since the displacement vectors Vx and Vy that satisfy $\Delta ij = 0$ may not exist with respect to all pixels in the window $\Omega ij$ 1602, the displacement vectors Vx and Vy that minimize $\Delta ij$ are determined.

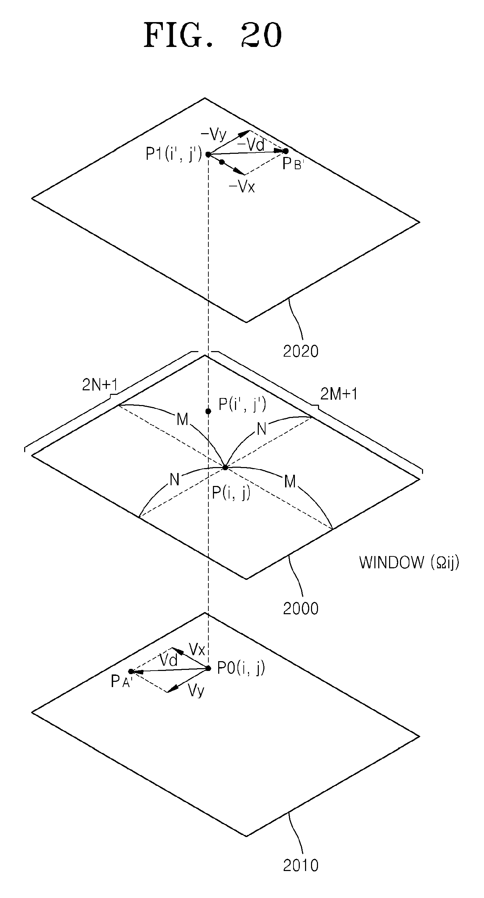

FIG. 20 is a reference diagram for describing a process of determining a horizontal direction displacement vector and a vertical direction displacement vector, according to an embodiment of the present invention.

Referring to FIG. 20, a window $\Omega ij$ 2000 has a size of $(2M+1)*(2N+1)$ based on a pixel P(i,j) of a current block that is bi-directionally predicted, wherein M and N are each an integer.

When P(i',j') denotes a pixel of a current block to be bi-directionally predicted in a window $(i',j') \in \Omega ij$ when $i-M \leq i' \leq i+M$ and $j-M \leq j' \leq j+M$), P0(i',j') denotes a pixel value of a first corresponding pixel of a first reference picture 2010 corresponding to the pixel P(i',j'), P1(i',j') denotes a pixel value of a second corresponding pixel of a second reference picture 2020 corresponding to the pixel P(i',j'), GradX0(i',j') denotes a horizontal direction gradient of the first corresponding pixel, GradY0(i',j') denotes a vertical direction gradient of the first corresponding pixel, GradX1(i',j') denotes a horizontal direction gradient of the second corresponding pixel, and GradY1(i',j') denotes a vertical direction gradient of the second corresponding pixel, a first displacement corresponding pixel PA' has a value according to equation, P0(i',j')+Vx*GradX0(i',j')+Vy*GradY0(i',j'), and a second displacement corresponding pixel PB' has a value according to equation, P1(i',j')-Vx*GradX1(i',j')-Vy*GradY1(i',j').

A displacement vector Vx in an x-axis direction and a displacement vector Vy in a y-axis direction, which minimize a difference $\Delta i'j'$ between the first displacement corresponding pixel PA' and the second displacement corresponding pixel PB', may be determined by using a maximum or minimum value of $\Phi(Vx,Vy)$ constituting a sum of squares of the difference Δij' according to Equation 10 below.

[Equation 10]

$$\Phi(Vx,Vy)= \sum_{i',j'\in\Omega ij} \Delta_{i'j'}^2$$

$$= \sum_{i',j'\in\Omega ij} (P0(i',j')\text{-}P1(i',j')+Vx(i,j)\cdot(GradX0(i',j')+GradX1(i',j'))+Vy(i,j)\cdot(GradY0(i',j')+GradY1(i',j')))^2$$

$$= \sum_{i',j'\in\Omega ij} [(P0(i',j')\text{-}P1(i',j'))^2+Vx^2(i,j)\cdot(GradX0(i',j')+GradX1(i',j'))^2+Vy^2(i,j)\cdot(GradY0(i',j')+GradY1(i',j'))^2$$

$$+2Vx(i,j)\cdot(GradX0(i',j')+GradX1(i',j'))\cdot(P0(i',j')\text{-}P1(i',j'))$$

$$+2Vy(i,j)\cdot(GradY0(i',j')+GradY1(i',j'))\cdot(P0(i',j')\text{-}P1(i',j'))$$

$$+2Vx(i,j)\cdot(GradX0(i',j')+GradX1(i',j'))\cdot(GradY0(i',j')+GradY1(i',j'))]$$

Φ(Vx,Vy) is a function using Vx and Vy as parameters, and the maximum or minimum value may be determined by calculating Vx and Vy that make the value of partial differentiated Φ(Vx,Vy) with respect to Vx and Vy to be 0 according to Equations 11 and 12 below.

[Equation 11]

$$\frac{\partial\Phi(Vx,Vy)}{\partial Vx}= \sum_{i',j'\in\Omega ij} [2Vx(i,j)\cdot(GradX0(i',j')+GradX1(i',j'))^2$$

$$+2(GradX0(i',j')+GradX1(i',j'))\cdot(P0(i',j')\text{-}P1(i',j'))$$

$$+2(GradX0(i',j')+GradX1(i',j'))\cdot Vy(i,j)\cdot(GradY0(i',j')+GradY1(i',j'))]=0$$

[Equation 12]

$$\frac{\partial\Phi(Vx,Vy)}{\partial Vy}= \sum_{i',j'\in\Omega ij} [2Vy(i,j)\cdot(GradY0(i',j')+GradY1(i',j'))^2$$

$$+2(GradY0(i',j')+GradY1(i',j'))\cdot(P0(i',j')\text{-}P1(i',j'))$$

$$+2(GradX0(i',j')+GradX1(i',j'))\cdot Vx(i,j)\cdot(GradY0(i',j')+GradY1(i',j'))]=0$$

Two linear equations using Vx(i,j) and Vy(i,j) as variables may be obtained as in Equation 13 below from Equations 11 and 12.

[Equation 13]

$$Vx(i,j)\cdot s1+Vy(i,j)\cdot s2=s3;$$

$$Vx(i,j)\cdot s4+Vy(i,j)\cdot s5=s6$$

s1 through s6 in Equation 13 are calculated according to Equation 14 below.

[Equation 14]

$$s1 = \sum_{i',j' \in \Omega_{i,j}} (GradX0(i',j') + GradX1(i',j'))^2$$

$$s2 = s4 = \sum_{i',j' \in \Omega_{i,j}} (GradX0(i',j') + GradX1(i',j'))(GradY0(i',j') + GradY1(i',j'))$$

$$s3 = -\sum_{i',j' \in \Omega_{i,j}} (P0(i',j') - P1(i',j'))(GradX0(i',j') + GradX1(i',j'))$$

$$s5 = \sum_{i',j' \in \Omega_{i,j}} (GradY0(i',j') + GradY1(i',j'))^2$$

$$s6 = -\sum_{i',j' \in \Omega_{i,j}} (P0(i',j') - P1(i',j'))(GradY0(i',j') + GradY1(i',j'))$$

When simultaneous equations of Equation 13 are solved, values of Vx(i,j) and Vy(i,j) may be obtained according to Vx(i,j)=det1/det and Vy(i,j)=det2/det based on Kramer's formulas. Here, det1=s3*s5-s2*s6, det2=s1*s6-s3*s4, and det=s1*s5-s2*s4.

Referring back to FIG. 14, the prediction value generator 1430 generates a bi-directional motion prediction value by adding a block unit bi-directional motion compensation value and a pixel unit motion compensation value. In detail, when P_OpticalFlow(i,j) denotes a bi-directional motion prediction value of a pixel located at (i,j) of a current block, P0(i,j) denotes a pixel value of a first corresponding pixel of a first reference picture corresponding to the pixel located at (i,j) of the current block, GradX0(i,j) denotes a horizontal direction gradient of the first corresponding pixel of the first reference picture, GradY0(i,j) denotes a vertical direction gradient of the first corresponding pixel of the first reference picture, P1(i,j) denotes a pixel value of a second corresponding pixel of a second reference picture corresponding to the pixel located at (i,j) of the current block, GradX1(i,j) denotes a horizontal direction gradient of the second corresponding pixel of the second reference picture, GradY1(i,j) denotes a vertical direction gradient of the second corresponding pixel of the second reference picture, Vx denotes a horizontal direction displacement vector, and Vy denotes a vertical direction displacement vector, the prediction value generator 1430 generates the bi-directional motion prediction value according to Equation 15 below.

[Equation 15]

$$P\_OpticalFlow(i,j) = (P0(i,j) + P1(i,j))/2$$
$$+ (Vx \cdot (GradX0(i,j) - GradX1(i,j)) + Vy \cdot (GradY0(i,j) - GradY1(i,j)))/2$$

In Equation 15, (P0(i,j)+P1(i,j))/2 corresponds to a block unit bi-directional motion compensation value and (Vx* (GradX0(i,j)-GradX1(i,j))+Vy*(GradY0(i,j)-GradY1(i,j)))/2 corresponds to a pixel unit motion compensation value calculated according to an embodiment of the present invention.

Equation 15 may be modified to Equation 16 below by multiplying a predetermined weight $\alpha$ to the pixel unit motion compensation value.

[Equation 16]

$$P\_OpticalFlow(i,j) = (P0(i,j) + P1(i,j))/2$$
$$+ (\alpha Vx \cdot (GradX0(i,j) - GradX1(i,j)) + \alpha Vy \cdot (GradY0(i,j) - GradY1(i,j)))/2$$

Here, the predetermined weight $\alpha$ may be smaller than 1, for example, $\alpha=0.56\pm0.05$.

Equation 13 above is calculated assuming that a temporal distance d0 between the current picture and the first reference picture and a temporal distance d1 between the current picture and the second reference picture are both 1. If d0 and d1 are not 1, a size of the predetermined displacement vector Vd may be scaled in inverse proportion to d0 and d1. In other words, when (Vx0, Vy0) denotes a displacement vector of a first reference picture indicating a first displacement corresponding pixel in a first corresponding pixel and (Vx1, Vy1) denotes a displacement vector of a second reference picture indicating a second displacement corresponding pixel in a second corresponding pixel, d0*Vx1=-d1*Vx0 and d0*Vy1=-d1*Vy0. The displacement vectors Vx and Vy may be calculated by calculating maximum and minimum values by partial differentiating a function $\Phi(Vx,Vy)$ with respect to the displacement vectors Vx and Vy when d=d1/d0. As described above, Vx(i,j)=det1/det, Vy(i,j)=det2/det, det1=s3*s5-s2*s6, det2=s1*s6-s3*s4, and det=s1*s5-s2*s4. Here, values of s1 through s6 are calculated according to Equation 17 below.

[Equation 17]

$$s1 = \sum_{i',j' \in \Omega_{i,j}} (GradX0(i',j')+d \cdot GradX1(i',j'))^2$$

$$s2 = s4 = \sum_{i',j' \in \Omega_{i,j}} (GradX0(i',j')+d \cdot GradX1(i',j'))(GradY0(i',j')+d \cdot GradY1(i',j'))$$

$$s3 = -\sum_{i',j' \in \Omega_{i,j}} (P0(i',j')-P1(i',j'))(GradX0(i',j')+d \cdot GradX1(i',j'))$$

$$s5 = \sum_{i',j' \in \Omega_{i,j}} (GradY0(i',j')+d \cdot GradY1(i',j'))^2$$

$$s6 = -\sum_{i',j' \in \Omega_{i,j}} (P0(i',j')-P1(i',j'))(GradY0(i',j')+d \cdot GradY1(i',j'))$$

Also, when the temporal distance d0 and the temporal distance d1 are not 1, Equation 16 is modified as Equation 18, and the prediction value generator 1430 generates the bi-directional motion compensation value according to Equation 18.

[Equation 18]

$$P\_OpticalFlow(i,j)=(P0(i,j)+P1(i,j))/2$$
$$+(\alpha Vx \cdot (GradX0(i,j)-d \cdot GradX1(i,j))+\alpha Vy \cdot (GradY0(i,j)-d \cdot GradY1(i,j)))/2$$

Meanwhile, the optical flow of Equation 2 described above is based on the assumption that the amount of change in pixel values according to time is 0, but a pixel value may change according to time. When q denotes the amount of change in pixel values according to time, Equation 2 is modified as Equation 19 below.

[Equation 19]

$$\frac{\partial I}{\partial t}+Vx \cdot \frac{\partial I}{\partial x}+Vy \cdot \frac{\partial I}{\partial y}=q$$

Here, q denotes an average of differences of pixel values in first and second corresponding regions, and may be calculated according to Equation 20 below.

[Equation 20]

$$q = \frac{\sum\limits_{i,j \in block} P1(i,j) - P0(i,j)}{2 \cdot Hor\_block\_Size \cdot ver\_block\_Size}$$

Hor_block_size denotes a horizontal direction size of a current block and ver_block_size denotes a vertical direction size of the current block. When the displacement vectors Vx and Vy are calculated by using a value of P1(i, j)-q considering the amount of change q, instead of P1(i,j) in Equations 6 through 18, Vx(i,j)=det1/det, Vy(i,j)=det2/det, det1=s3*s5-s2*s6, det2=s1*s6-s3*s4, and det=s1*s5-s2*s4. Here, values of s1 through s6 are calculated according to Equation 21 below.

[Equation 21]

$$s1 = \sum_{i',j' \in \Omega_{i,j}} (GradX0(i',j') + d \cdot GradX1(i',j'))^2$$

$$s2 = s4 = \sum_{i',j' \in \Omega_{i,j}} (GradX0(i',j') + d \cdot GradX1(i',j'))(GradY0(i',j') + d \cdot GradY1(i',j'))$$

$$s3 = -\sum_{i',j' \in \Omega_{i,j}} (P0(i',j') - P1(i',j') - q)(GradX0(i',j') + d \cdot GradX1(i',j'))$$

$$s5 = \sum_{i',j' \in \Omega_{i,j}} (GradY0(i',j') + d \cdot GradY1(i',j'))^2$$

$$s6 = -\sum_{i',j' \in \Omega_{i,j}} (P0(i',j') - P1(i',j') - q)(GradY0(i',j') + d \cdot GradY1(i',j'))$$

Here, the prediction value generator 1430 may also generate the bi-directional motion compensation value according to Equation 18 above.

Meanwhile, as described above, horizontal and vertical direction gradients may be obtained by calculating the amount of change at a sub-pixel location in horizontal and vertical directions of first and second corresponding pixels, or by using a predetermined filter.

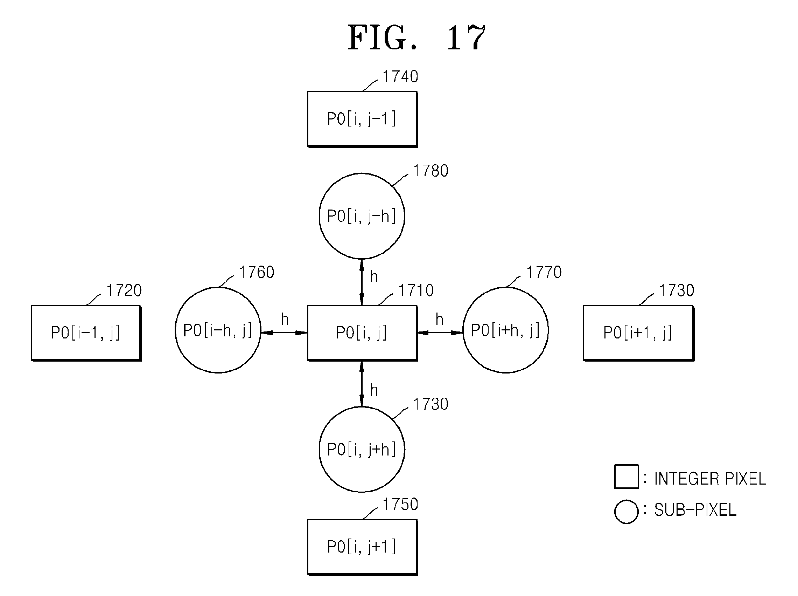

FIG. 17 is a reference diagram for describing a process of calculating horizontal and vertical direction gradients, according to an embodiment of the present invention. Referring to FIG. 17, a horizontal direction gradient GradX0(i,j) and a vertical direction gradient GradY0(i,j) of a first corresponding pixel P0(i,j) 1710 of a first reference picture may be calculated by respectively obtaining the amount of change in pixel values at adjacent sub-pixel locations in a horizontal direction of the first corresponding pixel P0(i,j) 1710 and the amount of change in pixel values at adjacent sub-pixel locations in a vertical direction. In other words, the horizontal direction gradient GradX0(i,j) may be calculated by calculating the amount of change in pixel values of a sub-pixel P0(i-h,j) 1760 and a sub pixel P0(i+h,j) 1770 away from the first corresponding pixel P0(i,j) 1710 by h in a horizontal direction, wherein h is a fraction smaller than 1, and the vertical direction gradient GradY0(i,j) may be calculated by calculating the amount of change in pixel values of a sub-pixel P0(i,j-h) 1780 and a sub pixel P0(i,j+h) 1790 away from the first corresponding pixel P0(i,j) 1710 by h in a vertical direction, according to Equation 22 below.

[Equation 22]

$$GradX0(i,j) = (p0(i+h,j) - P0(i-h,j))/2h;$$

$$GradY0(i,j) = (p0(i,j+h) - P0(i,j-h))/2h$$

Values of the sub-pixels P0(i-h,j) 1760, P0(i+h,j) 1770, P0(i,j-h) 1780, and P0(i, j+h) 1790 may be calculated by using a general interpolation method. Also, gradients of a second corresponding pixel of a second reference picture may be calculated in a similar manner as Equation 22.

According to an embodiment of the present invention, a gradient of each corresponding pixel may be calculated by using a predetermined filter, instead of calculating the amount of change in pixel values at sub-pixel locations according to Equation 22.

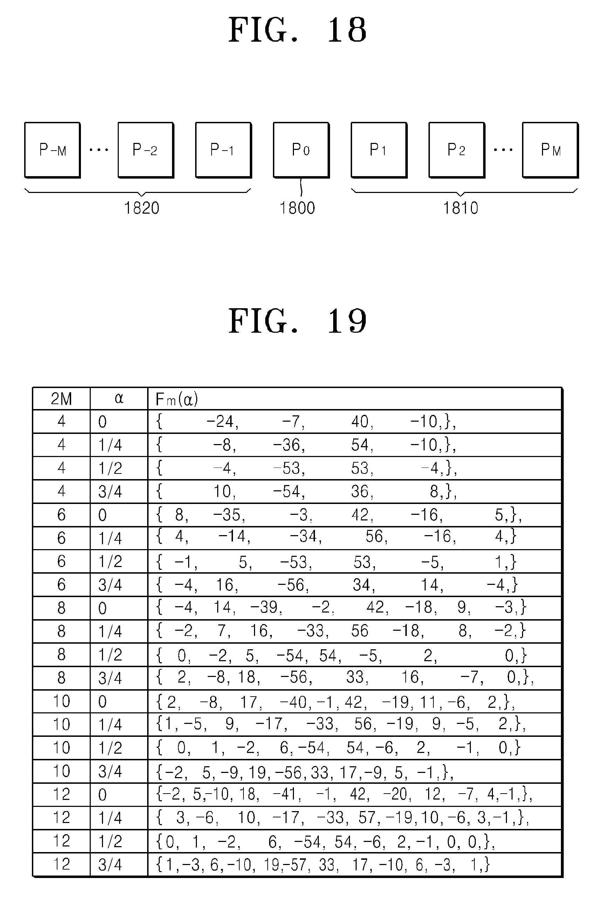

FIG. 18 is a reference diagram for describing a process of calculating horizontal and vertical direction gradients, according to another embodiment of the present invention, and FIG. 19 is a table showing filter coefficients of a gradient calculating filter, according to an embodiment of the present invention.

According to the other embodiment, a gradient may be determined by applying a predetermined filter to pixels of a reference picture. Referring to FIG. 18, a horizontal direction gradient of a corresponding pixel P0 1800 may be calculated by applying a predetermined pixel on M pixels 1820 to the left of the corresponding pixel P0 1800 and M pixels 1810 to the right of the corresponding pixel P0 1800. A filter coefficient used at this time may be determined according to a value of M used to determine a size of a window and a value of $\alpha$ indicating an interpolation location between integer pixels, as shown in FIG. 19. For example, when 2M=4 and a sub-pixel is away from the corresponding pixel P0 1800 by 1/4, i.e., $\alpha$=1/4, filter coefficients {-8. -36. 54, -10} on a second row of FIG. 19 are applied to adjacent pixels $P_{-2}$, $P_{-1}$, $P_1$, and $P_2$. Here, a horizontal direction gradient GradX0 of the corresponding pixel P0 1800 may be calculated based on a weighted sum of a filter coefficient and an adjacent pixel, according to equation, GradX0 = $-8*P_{-2}$, $-36*P_{-1}+54*P_1$ $-10*P_2$ +128>>8. Similarly, a vertical direction gradient is also calculated by applying filter coefficients of FIG. 19 to adjacent pixels according to a size 2N of a window and an interpolation location. Here, 2M of FIG. 19 may be replaced by 2N.

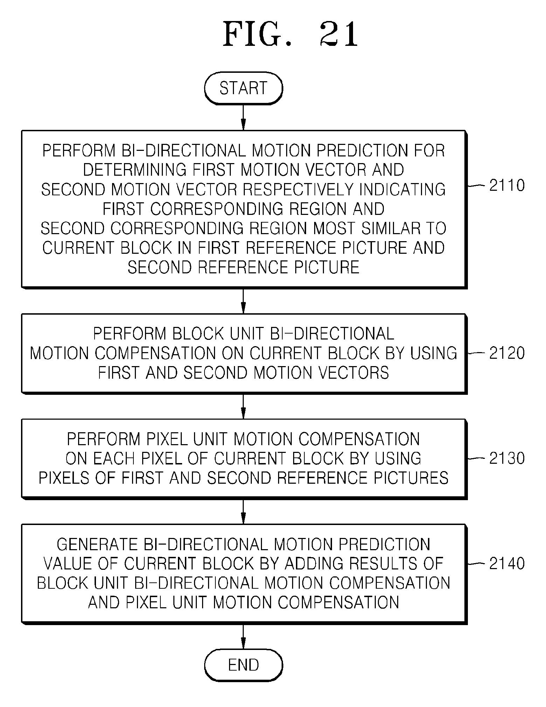

FIG. 21 is a flowchart illustrating a method of encoding a video, according to an embodiment of the present invention.

Referring to FIG. 21, the motion estimator 420 performs bi-directional motion prediction for determining a first motion vector and a second motion vector respectively indicating a first corresponding region and a second corresponding region most similar to a current block in a first reference picture and a second reference picture, in operation 2110.

In operation 2120, the block unit motion compensator 1410 performs block unit bi-directional motion compensation on the current block by using the first and second motion vectors.

In operation 2130, the pixel unit motion compensator 1420 performs pixel unit motion compensation on each pixel of the current block by using pixels of the first and second reference pictures. As described above, the pixel unit motion compensator 1420 may generate a pixel unit motion compensation value of each pixel of the current block by using horizontal and vertical direction gradients of a first corresponding pixel of the first reference picture corresponding to each pixel of the current block, horizontal and vertical direction gradients of a second corresponding pixel of the second reference picture corresponding to each pixel of the current block, and horizontal and vertical direction displacement vectors determined by using the pixels of the first and second reference pictures.

In operation 2140, the prediction value generator 1430 generates a bi-directional motion prediction value of the current block by adding results of block unit bi-directional motion compensation and pixel unit motion compensation. A residual signal that is a difference between the bi-directional motion prediction value predicted by the prediction value generator 1430 and an original input signal is then encoded in a bitstream via transformation, quantization, and entropy encoding. Meanwhile, according to an embodiment of the present invention, when the pixel unit motion compensation value is used, predetermined index information indicating such a use may be added to an encoded bitstream since the pixel unit motion compensation value is different from a general bi-directional motion prediction value.

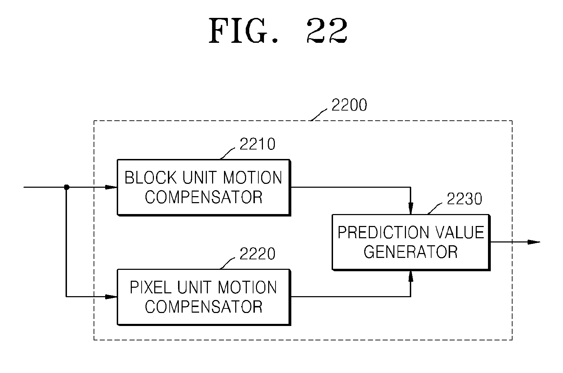

FIG. 22 is a block diagram of a motion compensator 2200 included in a decoding apparatus, according to an embodiment of the present invention. The motion compensator 2200 of FIG. 22 corresponds to the motion compensator 560 of FIG. 5.

Referring to FIG. 22, the motion compensator 2200 according to an embodiment of the present invention includes a block unit motion compensator 2210, a pixel unit motion compensator 2220, and a prediction value generator 2230.

The entropy decoder 520 of FIG. 5 described above extracts motion prediction mode information of a current block to be decoded from a bitstream, and when an extracted motion prediction mode is a bi-directional motion prediction mode using a pixel unit motion compensation value, extracts information about first and second motion vectors indicating first and second corresponding regions most similar to the current block in first and second reference pictures from the bitstream.

The block unit motion compensator 2210 performs block unit bi-directional motion compensation on the current block to be decoded by using bi-directional motion vectors extracted by the entropy decoder 520 of FIG. 5. Since the block unit motion compensator 2210 performs the same operations as the block unit motion compensator 1410 of FIG. 14, except that the bi-directional motion vectors extracted from the bitstream are used, detailed descriptions thereof will be omitted here.

The pixel unit motion compensator 2220 additionally performs pixel unit motion compensation on each pixel of the current block that is block unit bi-directional motion compensated, by using pixels of reference pictures indicated by the bi-directional motion vectors extracted from the bitstream. Since the pixel unit motion compensator 2220 performs the same operations as the pixel unit motion compensator 1420 of FIG. 14, detailed descriptions thereof will be omitted here.

The prediction value generator 2230 generates a final bi-directional motion prediction value of the current block by using the results of the block unit bi-directional motion compensation and pixel unit motion compensation.

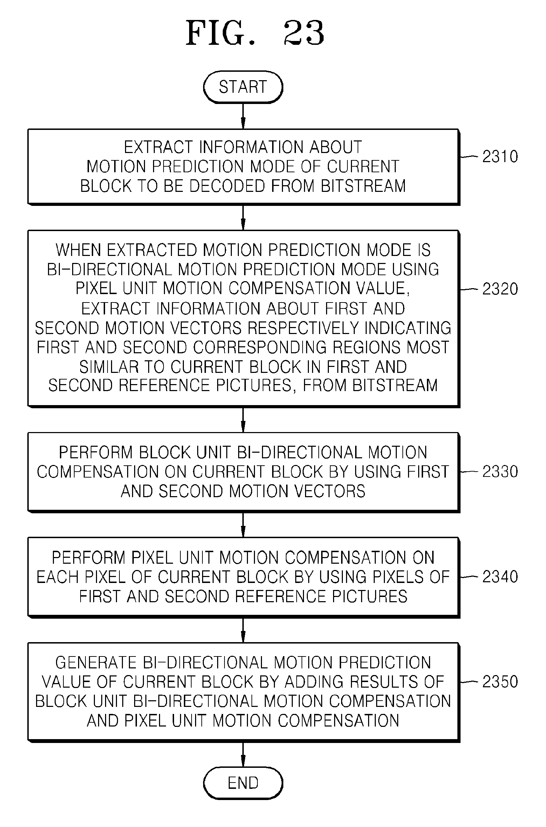

FIG. 23 is a flowchart illustrating a method of decoding a video, according to an embodiment of the present invention.

Referring to FIG. 23, the entropy decoder 520 extracts information about a motion prediction mode of a current block to be decoded from a bitstream, in operation 2310.

In operation 2320, when the extracted motion prediction mode is a bi-directional motion prediction mode using a pixel unit motion compensation value, the entropy decoder 520 additionally extracts information about first and second motion vectors respectively indicating first and second corresponding regions most similar to the current block in first and second reference pictures, from the bitstream.

In operation 2330, the block unit motion compensator 2210 performs block unit bi-directional motion compensation on the current block by using the first and second motion vectors.

In operation 2340, the pixel unit motion compensator 2220 performs pixel unit motion compensation on each pixel of the current block by using pixels of the first and second reference pictures. As described above, the pixel unit motion compensator 2220 may generate a pixel unit motion compensation value of each pixel of the current block by using horizontal and vertical direction gradients of a first corresponding pixel of the first reference picture corresponding to each pixel of the current block, horizontal and vertical direction gradients of a second corresponding pixel of the second reference picture corresponding to each pixel of the current block, and horizontal and vertical direction displacement vectors determined by using pixels of the first and second reference pictures.

In operation 2350, the prediction value generator 2230 generates a bi-directional motion prediction value of the current block by adding results of the block unit bi-directional motion compensation and pixel unit motion compensation. The bi-directional motion prediction value of the current block is added to a residual value of the current block, which is extracted from the bitstream and decoded, to restore the current block.

The embodiments of the present invention can be written as computer programs and can be implemented in general-use digital computers that execute the programs using a computer readable recording medium. Examples of the computer readable recording medium include magnetic storage media (e.g., ROM, floppy disks, hard disks, etc.) and optical recording media (e.g., CD-ROMs, or DVDs).

While this invention has been particularly shown and described with reference to preferred embodiments thereof, it will be understood by those of ordinary skill in the art that various changes in form and details may be made therein without departing from the spirit and scope of the invention as defined by the appended claims. The preferred embodiments should be considered in a descriptive sense only and not for purposes of limitation. Therefore, the scope of the invention is defined not by the detailed description of the invention but by the appended claims, and all differences within the scope will be construed as being included in the present invention.

**Claims**

1. A method of decoding a video, the method comprising:

   extracting information about a motion prediction mode of a current block to be decoded, from a bitstream;
   extracting information about a first motion vector and second motion vector respectively indicating a first corresponding region and second corresponding region most similar to the current block in a first reference picture and second reference picture from the bitstream, when the extracted motion prediction mode is a bi-directional motion prediction mode using a pixel unit motion compensation value;
   performing block unit bi-directional motion compensation on the current block by using the first motion vector and second motion vector;
   performing pixel unit motion compensation on each pixel of the current block by using pixels of the first reference picture and second reference picture; and
   generating a bi-directional motion prediction value of the current block by using results of the block unit bi-directional motion compensation and pixel unit motion compensation.

2. The method of claim 1, wherein the performing of the pixel unit motion compensation comprises generating a pixel unit motion compensation value of each pixel of the current block by using horizontal and vertical direction gradients of a first corresponding pixel of the first reference picture corresponding to each pixel of the current block, horizontal and vertical direction gradients of a second corresponding pixel of the second reference picture corresponding to each pixel of the current block, and a horizontal direction displacement vector and a vertical direction displacement vector determined by using pixels of the first and second reference pictures.

3.  The method of claim 2, wherein the horizontal direction displacement vector and the vertical direction displacement vector are determined such that a difference between a first displacement value obtained by displacing the first corresponding pixel of the first reference picture by using the horizontal direction displacement vector, the vertical direction displacement vector, and the horizontal and vertical direction gradients of the first corresponding pixel and a second displacement value obtained by displacing the second corresponding pixel of the second reference picture by using the horizontal direction displacement vector, the vertical direction displacement vector, and the horizontal and vertical direction gradients of the second corresponding pixel is minimum in a window having a predetermined size.

4.  The method of claim 3, wherein, when (i,j) denotes a location of a pixel of a current block bi-directionally predicted wherein i and j are each an integer, P0(i,j) denotes a pixel value of the first corresponding pixel of the first reference picture corresponding to the pixel of the current block bi-directionally predicted, P1(i,j) denotes a pixel value of the second corresponding pixel of the second reference picture corresponding to the pixel of the current block bi-directionally predicted, GradX0(i,j) denotes the horizontal direction gradient of the first corresponding pixel, GradY0 (i,j) denotes the vertical direction gradient of the first corresponding pixel, GradX1(i,j) denotes the horizontal direction gradient of the second corresponding pixel, GradY1(i,j) denotes the vertical direction gradient of the second corresponding pixel, Vx denotes the horizontal direction displacement vector, and Vy denotes the vertical direction displacement vector,
the first displacement value has a value according to equation, P0(i,j)+Vx*GradX0(i,j)+Vy*GradY0(i,j),
the second displacement value has a value according to equation, P1(i,j)-Vx*GradX1(i,j)-Vy*GradY1(i,j), and
the horizontal and vertical direction displacement vectors are determined such that a difference ($\Delta$ij) between the first and second displacement values is minimum.

5.  The method of claim 3, wherein, when the window ($\Omega$ij) has a size of (2M+1)*(2N+1) based on the pixel of the current block bi-directionally predicted wherein M and N are each an integer, (i',j') denotes a location of the pixel of the current block bi-directionally predicted in the window, P0(i',j') denotes a pixel value of the first corresponding pixel of the first reference picture corresponding to the pixel of the current block bi-directionally predicted, P1(i',j') denotes a pixel value of the second corresponding pixel of the second reference picture corresponding to the pixel of the current block bi-directionally predicted, GradX0(i',j') denotes the horizontal direction gradient of the first corresponding pixel, GradY0(i',j') denotes the vertical direction gradient of the first corresponding pixel, GradX1(i',j') denotes the horizontal direction gradient of the second corresponding pixel, GradY1(i',j') denotes the vertical direction gradient of the second corresponding pixel, Vx denotes the horizontal direction displacement vector, and Vy denotes the vertical direction displacement vector,
the first displacement value has a value according to equation, P0(i',j')+Vx*GradX0(i',j')+Vy*GradY0(i',j'),
the second displacement value has a value according to equation, P1(i',j')-Vx*GradX1(i',j')-Vy*GradY1(i',j'), and
the horizontal and vertical direction displacement vectors are determined such that a value according to an equation;

$$\sum_{i',j'\in\Omega_{i,j}} \Delta^2_{ij'}$$ that is a sum of squares of a difference ($\Delta$ij) between the first and second displacement values with respect to pixels of the current block bi-directionally predicted in the window ($\Omega$ij) is minimum.

6.  The method of claim 5, wherein, when s1 through s6 are calculated according to equations,

$$s1 = \sum_{i',j'\in\Omega_{i,j}} (GradX0(i',j')+GradX1(i',j'))^2$$
,

$$s2 = s4 = \sum_{i',j'\in\Omega_{i,j}} (GradX0(i',j')+GradX1(i',j'))(GradY0(i',j')+GradY1(i',j'))$$
,

$$s3 = - \sum_{i',j' \in \Omega_{i,j}} (P0(i',j') - P1(i',j'))(GradX0(i',j') + GradX1(i',j'))$$

,

$$s5 = \sum_{i',j' \in \Omega_{i,j}} (GradY0(i',j') + GradY1(i',j'))^2$$

,

and

$$s6 = - \sum_{i',j' \in \Omega_{i,j}} (P0(i',j') - P1(i',j'))(GradY0(i',j') + GradY1(i',j'))$$

and
det1=s3*s5-s2*s6, det2=s1*s6-s3*s4, and det=s1*s5-s2*s4,
a horizontal direction displacement vector Vx(i,j) of a pixel of the current block at an (i,j) location has a value according to an equation; Vx(i,j)=det1/det, and
a vertical direction displacement vector Vy(i,j) of the pixel of the current block at the (i,j) location has a value according to an equation; Vy(i,j)=det2/det.

7. The method of claim 5, wherein, when d0 denotes a temporal distance between a current picture of the current block and the first reference picture and d1 denotes a temporal distance between the current picture and the second reference picture, d=d1/d0, and
when s1 trough s6 are calculated according to equations,

$$s1 = \sum_{i',j' \in \Omega_{i,j}} (GradX0(i',j') + d \cdot GradX1(i',j'))^2$$

,

$$s2 = s4 = \sum_{i',j' \in \Omega_{i,j}} (GradX0(i',j') + d \cdot GradX1(i',j'))(GradY0(i',j') + d \cdot GradY1(i',j'))$$

,

$$s3 = - \sum_{i',j' \in \Omega_{i,j}} (P0(i',j') - P1(i',j'))(GradX0(i',j') + d \cdot GradX1(i',j'))$$

,

$$s5 = \sum_{i',j' \in \Omega_{i,j}} (GradY0(i',j') + d \cdot GradY1(i',j'))^2$$

,

and

$$s6 = - \sum_{i',j' \in \Omega_{i,j}} (P0(i',j') - P1(i',j'))(GradY0(i',j') + d \cdot GradY1(i',j'))$$

and
det1=s3*s5-s2*s6, det2=s1*s6-s3*s4, and det=s1*s5-s2*s4,
a horizontal direction displacement vector Vx(i,j) of a pixel of the current block at an (i,j) location has a value according to an equation; Vx(i,j)=det1/det, and
a vertical direction displacement vector Vy(i,j) of the pixel of the current block at the (i,j) location has a value according to an equation; Vy(i,j)=det2/det.

8. The method of claim 5, wherein, when q denotes an average of differences of pixel values between pixels of the first and second corresponding regions, d0 denotes a temporal distance between a current picture of the current block and the reference picture, and d1 denotes a temporal distance between the current picture and the second reference picture, d=d1/d0, and

when s1 through s6 are calculated according to equations,

$$s1 = \sum_{i',j' \in \Omega_{i,j}} \left( GradX0(i',j') + d \cdot GradX1(i',j') \right)^2,$$

$$s2 = s4 = \sum_{i',j' \in \Omega_{i,j}} \left( GradX0(i',j') + d \cdot GradX1(i',j') \right)\left( GradY0(i',j') + d \cdot GradY1(i',j') \right)$$

$$s3 = - \sum_{i',j' \in \Omega_{i,j}} \left( P0(i',j') - P1(i',j') - q \right)\left( GradX0(i',j') + d \cdot GradX1(i',j') \right),$$

$$s5 = \sum_{i',j' \in \Omega_{i,j}} \left( GradY0(i',j') + d \cdot GradY1(i',j') \right)^2,$$

and

$$s6 = - \sum_{i',j' \in \Omega_{i,j}} \left( P0(i',j') - P1(i',j') - q \right)\left( GradY0(i',j') + d \cdot GradY1(i',j') \right)$$

and
det1=s3*s5-s2*s6, det2=s1*s6-s3*s4, and det=s1*s5-s2*s4,
a horizontal direction displacement vector Vx(i,j) of a pixel of the current block at an (i,j) location has a value according to an equation; Vx(i,j)=det1/det, and
a vertical direction displacement vector Vy(i,j) of the pixel of the current block at the (i,j) location has a value according to an equation; Vy(i,j)=det2/det.

9. The method of claim 2, wherein the horizontal and vertical direction gradients are determined by calculating amounts of change in pixel values at sub-pixel locations in horizontal and vertical directions of the first and second corresponding pixels.

10. The method of claim 2, wherein the horizontal and vertical direction gradients are calculated by using a predetermined filter.

11. The method of claim 1, wherein the generating of the bi-directional motion prediction value comprises, when P_OpticalFlow(i,j) denotes a bi-directional motion prediction value of a pixel at a (i,j) location of the current block, P0 (i,j) denotes a pixel value of a first corresponding pixel of the first reference picture corresponding to the pixel at the (i,j) location of the current block, GradX0(i,j) denotes a horizontal direction gradient of the first corresponding pixel of the first reference picture, GradY0(i,j) denotes a vertical direction gradient of the first corresponding pixel of the first reference picture, P1(i,j) denotes a pixel value of a second corresponding pixel of the second reference picture corresponding to the pixel at the (i,j) lolcation of the current block, GradX1(i,j) denotes a horizontal direction gradient of the second corresponding pixel of the second reference picture, GradY1(i,j) denotes a vertical direction gradient of the second corresponding pixel of the second reference picture, Vx denotes the horizontal direction displacement vector, and Vy denotes the vertical direction displacement vector,
determining the bi-directional motion prediction value P_OpticalFlow(i,j) by adding a block unit bi-directional motion compensation value calculated according to an equation; (P0(i,j)+P1(i,j))/2 and a pixel unit motion compensation value calculated according to equation, (Vx*(GradX0(i,j)-GradX1(i,j))+Vy*(GradY0(i,j)-GradY1(i,j)))/2.

12. The method of claim 11, further comprising determining a value obtained by multiplying a predetermined weight to the pixel unit motion compensation value as the pixel unit motion compensation value.

13. An apparatus for decoding a video, the apparatus comprising:

an entropy decoder for extracting information about a motion prediction mode of a current block to be decoded, from a bitstream, and extracting information about a first motion vector and second motion vector respectively indicating a first corresponding region and second corresponding region most similar to the current block in a first reference picture and second reference picture from the bitstream, when the extracted motion prediction mode is a bi-directional motion prediction mode using a pixel unit motion compensation value;
a block unit motion compensator for performing block unit bi-directional motion compensation on the current block by using the first motion vector and second motion vector;
a pixel unit motion compensator for performing pixel unit motion compensation on each pixel of the current block by using pixels of the first reference picture and second reference picture; and
a prediction value generator for generating a bi-directional motion prediction value of the current block by using results of the block unit bi-directional motion compensation and pixel unit motion compensation.

14. A method of encoding a video, the method comprising:

performing bi-directional motion prediction for determining a first motion vector and a second motion vector respectively indicating a first corresponding region and a second corresponding region most similar to a current block in a first reference picture and a second reference picture;
performing block unit bi-directional motion compensation on the current block by using the first motion vector and the second motion vector;
performing pixel unit motion compensation on each pixel of the current block by using pixels of the first reference picture and second reference picture; and
generating a bi-directional motion prediction value of the current block by using results of the block unit bi-directional motion compensation and pixel unit motion compensation.

15. An apparatus for encoding a video, the apparatus comprising:

a motion predictor for performing bi-directional motion prediction for determining a first motion vector and a second motion vector respectively indicating a first corresponding region and a second corresponding region most similar to a current block in a first reference picture and a second reference picture;
a block unit motion compensator for performing block unit bi-directional motion compensation on the current block by using the first motion vector and the second motion vector;
a pixel unit motion compensator for performing pixel unit motion compensation on each pixel of the current block by using pixels of the first reference picture and second reference picture; and
a prediction value generator for generating a bi-directional motion prediction value of the current block by using results of the block unit bi-directional motion compensation and pixel unit motion compensation.

# FIG. 1

/100

MAXIMUM CODING SPLITTER /110 → CODING UNIT DETERMINER /120 → OUTPUT UNIT /130

# FIG. 2

/200

RECEIVER /210 → IMAGE DATA AND ENCODING INFORMATION EXTRACTOR /220 → IMAGE DATA DECODER /230

# FIG. 3

RESOLUTION:1920×1080
MAXIMUM SIZE OF CODING UNIT:64
MAXIMUM DEPTH=2

— 310

RESOLUTION:1920×1080
MAXIMUM SIZE OF CODING UNIT:64
MAXIMUM DEPTH=3

— 320

RESOLUTION:352×288
MAXIMUM SIZE OF CODING UNIT:16
MAXIMUM DEPTH=1

— 330

# FIG. 4

# FIG. 5

EP 2 557 795 A2

# FIG. 6

# FIG. 7

CODING UNIT (710)          TRANSFORMATION UNIT(720)

64

64    64×64          →          32
                              32    32×32

# FIG. 8

PARTITION TYPE (800)

2N ⁄802       2N ⁄804       N ⁄806       N ⁄808

2N   CU_0     N   0        2N   0   1     N   0   1
              1                           2   3
64×64

PREDICTION MODE (810)

⁄812          ⁄814          ⁄816

INTRA MODE    INTER MODE    SKIP MODE

SIZE OF TRANSFORMATION UNIT (820)

⁄822    ⁄824          ⁄826    ⁄828

INTRA                 INTER

# FIG. 9

EP 2 557 795 A2

DEPTH=0

SPLIT (920)

2N_0

| | |
|---|---|
| 2N_0 | CU_0 |

900

910

| 2N_0 | 2N_0 | N_0 | N_0 |
|---|---|---|---|
| 2N_0 | N_0 <br> 0 <br> 2N_0 1 | N_0 <br> 0 1 | 0 1 <br> 2 3 |
| 912 | 914 | 916 | 918 |

| 0 | 1 |
|---|---|
| 2 | 3 |

930

DEPTH=1

SPLIT (950)

2N_1

| | |
|---|---|
| 2N_1 | CU_1 |

930

940

| 2N_1 | 2N_1 | N_1 | N_1 |
|---|---|---|---|
| 2N_1 | N_1 <br> 0 <br> 2N_1 1 | N_1 <br> 0 1 | 0 1 <br> 2 3 |
| 942 | 944 | 946 | 948 |

| 0 | 1 |
|---|---|
| 2 | 3 |

960

SPLIT (970)

DEPTH=d-1

2N_(d-1)

| | |
|---|---|
| 2N_(d-1) | CU_(d-1) |

980

990

| 2N_(d-1) | 2N_(d-1) | N_(d-1) | N_(d-1) |
|---|---|---|---|
| 2N_(d-1) | N_(d-1) <br> 0 <br> 2N_(d-1) 1 | N_(d-1) <br> 0 1 | 0 1 <br> 2 3 |
| 992 | 994 | 996 | 998 |

2N_d

| |
|---|
| 2N_d |

999

# FIG. 10

CODING UNIT (1010)

# FIG. 11

# FIG. 12

1014—

—1016

—1022

1032

—1048

—1054

TRANSFORMATION UNIT (1070)

1050      1052

# FIG. 13

EP 2 557 795 A2

CU

1300

| | | |
|---|---|---|
| 1302 | 1312 | 1314 |
| | 1316 | **1318** |

| | |
|---|---|
| 1304 | 1306 |

PU

| 1322 | 1324 | 1326 | 1328 | 1332 | 1334 | 1336 | 1338 |
|---|---|---|---|---|---|---|---|
| 2Nx2N | 2NxN | Nx2N | NxN | 2NxnU | 2NxnD | nLx2N | nRx2N |

TU

TU size flag=0 — 1342

TU size flag=1 — 1344

TU

TU size flag=0 — 1352

TU size flag=1 — 1354

# FIG. 14

```
                                    ___1400
   _____
  |                    ___1410                 |
  |          ┌───────────────────────┐         |
  |          │ BLOCK UNIT MOTION      │         |
  ●─────────▶│ COMPENSATOR            │────┐    |
  |          └───────────────────────┘    │    |
  |                                     ___1430 |
  |                              ┌──────────────┐
  |                         └───▶│ PREDICTION VALUE │──────▶
  |                    ___1420   │ GENERATOR        │
  |          ┌───────────────────────┐    │    |
  |          │ PIXEL UNIT MOTION      │────┘    |
  └─────────▶│ COMPENSATOR            │         |
  |          └───────────────────────┘         |
  |_____|
```

# FIG. 15

SECOND REFERENCE
PICTURE

CURRENT PICTURE

FIRST REFERENCE
PICTURE

# FIG. 16

# FIG. 17

```
                           ┌─────────────┐ ─1740
                           │  PO[i, j−1] │
                           └─────────────┘

                              ○ ─1780
                           PO[i, j−h]
                                 ↕ h
         1720─┐          1760─┐      1710─┐      1770─┐          1730─┐
      ┌──────────┐    ○          ┌──────────┐    ○          ┌──────────┐
      │ PO[i−1, j]│←h→ PO[i−h, j]←h│ PO[i, j]│←h PO[i+h, j]  │ PO[i+1, j]│
      └──────────┘                └──────────┘                └──────────┘
                                 ↕ h
                              ○ ─1730
                           PO[i, j+h]

                           ┌─────────────┐ ─1750
                           │  PO[i, j+1] │
                           └─────────────┘
```

□ : INTEGER PIXEL

○ : SUB-PIXEL

EP 2 557 795 A2

# FIG. 18

# FIG. 19

| 2M | α | Fm(α) |
|---|---|---|
| 4 | 0 | { -24, -7, 40, -10,}, |
| 4 | 1/4 | { -8, -36, 54, -10,}, |
| 4 | 1/2 | { -4, -53, 53, -4,}, |
| 4 | 3/4 | { 10, -54, 36, 8,}, |
| 6 | 0 | { 8, -35, -3, 42, -16, 5,}, |
| 6 | 1/4 | { 4, -14, -34, 56, -16, 4,} |
| 6 | 1/2 | { -1, 5, -53, 53, -5, 1,} |
| 6 | 3/4 | { -4, 16, -56, 34, 14, -4,} |
| 8 | 0 | { -4, 14, -39, -2, 42, -18, 9, -3,} |
| 8 | 1/4 | { -2, 7, 16, -33, 56 -18, 8, -2,} |
| 8 | 1/2 | { 0, -2, 5, -54, 54, -5, 2, 0,} |
| 8 | 3/4 | { 2, -8, 18, -56, 33, 16, -7, 0,}, |
| 10 | 0 | { 2, -8, 17, -40, -1, 42, -19, 11, -6, 2,}, |
| 10 | 1/4 | {1, -5, 9, -17, -33, 56, -19, 9, -5, 2,}, |
| 10 | 1/2 | { 0, 1, -2, 6, -54, 54, -6, 2, -1, 0,} |
| 10 | 3/4 | {-2, 5, -9, 19, -56, 33, 17, -9, 5, -1,}, |
| 12 | 0 | {-2, 5, -10, 18, -41, -1, 42, -20, 12, -7, 4, -1,}, |
| 12 | 1/4 | { 3, -6, 10, -17, -33, 57, -19, 10, -6, 3, -1,}, |
| 12 | 1/2 | {0, 1, -2, 6, -54, 54, -6, 2, -1, 0, 0,}, |
| 12 | 3/4 | {1, -3, 6, -10, 19, -57, 33, 17, -10, 6, -3, 1,} |

# FIG. 20

# FIG. 21

START

PERFORM BI-DIRECTIONAL MOTION PREDICTION FOR
DETERMINING FIRST MOTION VECTOR AND
SECOND MOTION VECTOR RESPECTIVELY INDICATING
FIRST CORRESPONDING REGION AND
SECOND CORRESPONDING REGION MOST SIMILAR TO
CURRENT BLOCK IN FIRST REFERENCE PICTURE AND
SECOND REFERENCE PICTURE — 2110

PERFORM BLOCK UNIT BI-DIRECTIONAL
MOTION COMPENSATION ON CURRENT BLOCK BY USING
FIRST AND SECOND MOTION VECTORS — 2120

PERFORM PIXEL UNIT MOTION COMPENSATION
ON EACH PIXEL OF CURRENT BLOCK BY USING
PIXELS OF FIRST AND SECOND REFERENCE PICTURES — 2130

GENERATE BI-DIRECTIONAL MOTION PREDICTION
VALUE OF CURRENT BLOCK BY ADDING RESULTS OF
BLOCK UNIT BI-DIRECTIONAL MOTION COMPENSATION
AND PIXEL UNIT MOTION COMPENSATION — 2140

END

# FIG. 22

# FIG. 23

START

EXTRACT INFORMATION ABOUT
MOTION PREDICTION MODE OF CURRENT
BLOCK TO BE DECODED FROM BITSTREAM — 2310

WHEN EXTRACTED MOTION PREDICTION MODE IS
BI-DIRECTIONAL MOTION PREDICTION MODE USING
PIXEL UNIT MOTION COMPENSATION VALUE,
EXTRACT INFORMATION ABOUT FIRST AND
SECOND MOTION VECTORS RESPECTIVELY INDICATING
FIRST AND SECOND CORRESPONDING REGIONS MOST
SIMILAR TO CURRENT BLOCK IN FIRST AND
SECOND REFERENCE PICTURES, FROM BITSTREAM — 2320

PERFORM BLOCK UNIT BI-DIRECTIONAL MOTION
COMPENSATION ON CURRENT BLOCK BY USING FIRST
AND SECOND MOTION VECTORS — 2330

PERFORM PIXEL UNIT MOTION COMPENSATION ON
EACH PIXEL OF CURRENT BLOCK BY USING PIXELS OF
FIRST AND SECOND REFERENCE PICTURES — 2340

GENERATE BI-DIRECTIONAL MOTION PREDICTION
VALUE OF CURRENT BLOCK BY ADDING RESULTS OF
BLOCK UNIT BI-DIRECTIONAL MOTION COMPENSATION
AND PIXEL UNIT MOTION COMPENSATION — 2350

END